# EUROPEAN PATENT APPLICATION

(11) **EP 1 635 266 A1**
(43) Date of publication of application: **15.03.2006**
(21) Application number: 03736129.2
(22) Date of filing: 10.06.2003
(51) Int. Cl.: G06F 13/00, G06F 12/00, G06F 12/14, H04N 1/00, H04N 7/16, H04N 5/78

(54) **DATA TRANSMISSION SYSTEM**

(71) Applicant: FUJITSU LIMITED, Kawasaki-shi, Kanagawa 211-8588 (JP)
(72) Inventor: MIZUNO, J., FUJITSU PERSONAL COMPUTER SYSTEMS LTD., Inagi-shi, Tokyo 206-0801 (JP); TANAKA, T., FUJITSU PERSONAL COMPUTER SYSTEMS LTD, Inagi-shi, Tokyo 206-0801 (JP); UEDA, S., FUJITSU PERSONAL COMPUTER SYSTEMS LTD., Inagi-shi, Tokyo 206-0801 (JP); TAKIYAMA, S., FUJITSU PERSONAL COMPUTER SYSTEMS, Inagi-shi, Tokyo 206-0801 (JP)
(74) Representative: Sunderland, James Harry
(86) International application number: PCT/JP2003/007361
(87) International publication number: WO 2004/111861

(57) **Abstract**

Buttons on an image display terminal are related to destinations of transmission of the image displayed on the display screen. When a user transmits an image to a predetermined destination on a server, the user presses the corresponding button on the image display terminal, thereby specifying the destination.

## Description

### Technical Field

The present invention relates to a data transmission system, an image display terminal, a server, a data transmission method, a data transmission program, and a computer readable recording medium having recorded therein the data transmission program, which are suitably applied to data sharing systems.

### Background Art

Conventionally, image display terminals that cause display units to display images have been developed. Among such image display terminals, an image display terminal specialized for a function for displaying images is generally called an electronic picture frame.

This image display terminal displays image data, which are read from a storage medium such as a memory card, in order and reproduces audio data.

In the conventional image display terminal, when a user receives image data from someone and displays the image data, the user asks the person to mail a recording medium having recorded thereon the image data.

In addition, when the user receives image data from someone and displays the image data, there is also means for transferring data, which is received by a personal computer using an electronic mail or the like, to a recording medium and, then, causing the image display terminal to read the data.

In the former case, the mailing for the recording medium takes time. In addition, it is necessary to return the recording medium to recycle the recording medium.

Therefore, in the former case, there are problems in terms of speed and cost.

In the latter case, there is no problem in terms of speed compared with the former case.

However, in the latter case, both a receiver and a sender have to own and operate personal computers.

Therefore, there is a problem in that a user not accustomed to a personal computer has an extremely heavy burden.

On the other hand, as the image display terminal, an online image display terminal, which can automatically read image data in a specific area on a server through a telephone line and display the image data one after another, has also been developed.

With this image display terminal, even if a partner, with whom a user exchange images, is in a remote location, the user can cause an image display terminal of the partner to display an image by transmitting data to a server using a personal computer and the Internet.

Therefore, in the image display terminal on an image receiving side, it is possible to view an image sent from a partner even if a special system such as a personal computer is not provided.

However, the conventional image display terminal, which can receive image data, does not have a method of transmitting image data and audio data from the image display terminal to the server.

As a result, a person, who wishes to send a predetermined image or sound to a partner, still has to use another apparatus such as a personal computer in order to use this service.

Therefore, the conventional technique still has a problem in operability.

On the other hand, if a function for transmitting data can be realized only by an image display terminal, it is possible to exchange data directly between terminals without intervention of an apparatus such as a personal computer.

As a result, operability is improved.

For that purpose, in the conventional technique, it is necessary to provide the image display terminal with some input device for performing operation for specifying a transmission partner and data, a memory slot that can read a medium used in a digital camera or the like in order to read data to be transmitted, and the like.

However, in adopting a method of designating an address, an ID, or the like using a software keyboard or a numeric keypad, which is used together with a pointing device such as a touch panel or a mouse, in order to select an image to be transmitted or select a partner as in an electronic mail service on a personal computer, cost for the devices is added to product cost of the image display terminal.

As operation for the image display terminal, operation similar to that for a personal computer has to be performed after all. Thus, an operator is required to have knowledge equivalent to knowledge for handling the personal computer.

The present invention has been made in view of the circumstances described above and it is an object of the present invention to provide a data transmission system, an image display terminal, a server, a data transmission method, a data transmission program, and a computer readable recording medium having recorded therein the data transmission program.
Patent Document 1
   JP 2002-515658 A
Patent Document 2
   JP 10-304292 A
Patent Document 3
   JP 2002-259332 A

### Disclosure of the Invention

A data transmission system according to the present invention includes:
an image display terminal including:
   display means that displays an image;
   a first recording means that records an image file of the image to be displayed;
   transmission instructing means that instructs transmitting means to transmit the image file of the image to another recording means different from the first recording means;
   destination designating means that designates a destination of the another recording medium; and
   transmitting means that gives an own terminal ID and an ID for identifying the destination designating means to the image file of the image to be transmitted and transmits the image file to an apparatus having the another recording means; and
   a server including:
      a second recording means that is identified on the basis of the own terminal ID and the ID for identifying the destination designating means; and
      processing means that records the image file in the second recording means on the basis of the own terminal ID and the ID for identifying the destination designating means.

Further, in a data transmission system according to the present invention:
plural image display terminals are provided;
the server includes at least one ormore second recording means; and
the own terminal ID and the ID for identifying the destination designating means of each of at least two or more image display terminals of the image display terminals identify identical second recording means among the second recording means.

Further, in a data transmission system according to the present invention:
the image display terminal includes at least one or more buttons;
the transmission instructing means is constituted of at least one of the buttons; and
the destination designating means is constituted of at least one of the buttons.

Further, in a data transmission system according to the present invention, the image display terminal includes transmission display means that causes the display means to display information indicating whether or not the displayed image can be transmitted.

Further, in a data transmission system according to the present invention:
the server includes:
   a third recording means that records transmission authority information, which indicates whether or not the server has an authority to transmit the image file recorded in the second recording means to another recording means, set for each second recording means and for each image display terminal; and
   a second transmitting means that transmits the transmission authority information recorded in the third recording means to the image display terminal; and
   the transmission display means causes, when the transmission display means is set to have a transmission authority in the transmission authority information, the display means to display information, which indicates that an image of the image file recorded in the first recording means can be transmitted, recorded in the second recording means corresponding to the transmission authority information.

Further, in a data transmission system according to the present invention:
the server includes:
   a fourth recording means that records edition authority information, which indicates whether or not the server has an authority to transmit the image file to the second recording means, set for each second recording means and for each image display terminal; and
   a third transmittingmeans that transmits the edition authority information recorded in the fourth recording means to the image display terminal;
   the image display terminal includes destination display means that causes the display means to display a destination indicating the another recording means; and
   the destination display means causes, when the destination display means is set to have an edition authority in the edition authority information, the display means to display a destination corresponding to the second recording means that corresponds to the edition authority information.

Further, an image display terminal according to the present invention includes:
display means that displays an image;
recording means that records an image file of the image to be displayed;
transmission instructing means that instructs transmitting means to transmit the image file of the image to another recording means different from the recording means;
destination designating means that designates a destination of the another recording medium; and
transmitting means that gives an own terminal ID and an ID for identifying the destination designating means to the image file of the image to be transmitted and transmits the image file to an apparatus having the another recording means.

Further, an image display terminal according to the present invention includes:
at least one or more buttons;
the transmission instructing means is constituted of at least one of the buttons; and
the destination designating means is constituted of at least one of the buttons.

Further, in an image display terminal according to the present invention, the image display terminal includes transmission display means that causes the display means to display information indicating whether or not the displayed image can be transmitted.

Further, in an image display terminal according to the present invention the transmission display means causes, when the transmission display means is set to have a transmission authority in transmission authority information indicating whether or not the transmission display means has an authority to transmit an image file displayed on the display means to the another recording means, the display means to display information that indicates that an image of the image file recorded in the first recording means can be transmitted.

Further, an image display terminal according to the present invention includes destination display means that causes the display means to display a destination indicating the another recording means,
wherein the destination display means causes, when the destination display means is set to have an edition authority in the edition authority information indicating whether or not the destination display means has an authority transmit an image file to the another recording means in the transmission destination of the image file, the display means to display a destination corresponding to the another recording means that corresponds to the edition authority information.

Further, a server according to the present invention includes:
a first recording means that is identified on the basis of an own terminal ID of an image display terminal that displays an image and an ID for identifying destination designating means, which designates a destination, provided in the image display terminal and associated with a destination of the recording means in which the image file is to be recorded; and
processing means that records an image file, which is received together with the own terminal ID and the ID for identifying the destination designating means, in the first recording means on the basis of the own terminal ID and the ID for identifying the destination designating means.

Further, a server according to the present invention includes at least one or more first recording means,
wherein the own terminal ID and the ID for identifying the destination designating means of each of at least two or more image display terminals of the image display terminals identify identical second recording means among the recording means.

Further, a server according to the present invention includes:
a second recording means that records transmission authority information, which indicates whether or not the server has an authority to transmit the image file recorded in the first recording means to another recording means, set for each first recording means and for each image display terminal; and
a first transmitting means that transmits the transmission authority information recorded in the second recording means to the image display terminal.

Further, a server according to the present invention includes:
a third recording means that records edition authority information, which indicates whether or not the server has an authority to transmit the image file to the first recording means, set for each first recordingmeans and for each image display terminal; and
a second transmitting means that transmits the edition authority information recorded in the third recording means to the image display terminal.

Further, a data transmission method according to the present invention includes:
a first display step in which an image display terminal displays an image on displaying means;
a transmission instructing step in which the image display terminal instructs transmitting means to transmit an image file of the image to another recording means;
a destination designating step in which the image display terminal designates a destination on the basis of an input to destination designating means that designates a destination of the another recording means;
a first transmission step in which the image display terminal gives an own terminal ID and an ID for identifying the destination designating means to the image file of the image to be transmitted and transmits the image file to an apparatus having the another recording means; and
a processing step in which a server records the image file in first recording means, which is identified on the basis of the own terminal ID and the ID for identifying the destination designating means, on the basis of the own terminal ID and the ID for identifying the destination designating means.

Further, in a data transmission method according to the present invention:
the server includes a second recording means that records transmission authority information, which indicates whether or not the server has an authority to transmit the image file recorded in the first recording means to another recording means, set for each first recording means and for each image display terminal; and
the data transmission method includes:
   a second transmission step in which the server transmits transmission authority information recorded in the second recording means to the image display terminal; and
   a second display step in which the image display terminal causes, when the image display terminal is set to have a transmission authority in the transmission authority information, the display means to display information indicating that the image of the image file recorded in the first recording means can be transmitted.

Further, in a data transmission method according to the present invention:
the server includes a third recording means that records edition authority information, which indicates whether or not the server has an authority to transmit the image file to the first recording means, set for each first recording means and for each image display terminal; and
the data transmission method includes:
   a third transmission step in which the server transmits edition authority information recorded in the third recording means to the image display terminal; and
   a third display step in which the image display terminal causes, when the image display terminal is set to have an edition authority in the edition authority information, the display means to display a destination corresponding to the first recording means that correspond to the edition authority information.

Further, a data transmission program according to the present invention causes a computer to function as:
display means that displays an image;
recording means that records an image file of the image to be displayed;
transmission instructing means that instructs transmitting means to transmit the image file of the image to another recording means different from the recording means;
destination designating means that designates a destination of the another recording medium; and
the transmitting means that gives an own terminal ID and an ID for identifying the destination designating means to the image file of the image to be transmitted and transmits the image file to an apparatus having the another recording means.

Further, in a data transmission program according to the present invention, the image display terminal includes transmission display means that causes the display means to display information indicating whether or not the displayed image can be transmitted.

Further, in a data transmission program according to the present invention, the transmission display means causes, when the transmission display means is set to have a transmission authority in transmission authority information indicating whether or not the transmission display means has an authority to transmit an image file displayed on the display means to the another recording means, the display means to display information that indicates that an image of the image file recorded in the first recording means can be transmitted.

Further, in a data transmission program according to the present invention:
the program causes the computer to function as destination display means that causes the display means to display a destination indicating the another recording means; and
the destination display means causes, when the destination display means is set to have an edition authority in the edition authority information indicating whether or not the destination display means has an authority transmit an image file to the another recording means in the transmission destination of the image file, the display means to display a destination corresponding to the another recording means that corresponds to the edition authority information.

Further, a data transmission program according to the present invention causes a computer to function as:
a first recording means that records an image file and is identified on the basis of an own terminal ID of an image display terminal that displays an image and an ID for identifying destination designating means, which designates a destination, provided in the image display terminal and associated with a destination of the recording means in which the image file is to be recorded; and
processing means that records the image file, which is received together with the own terminal ID and the ID for identifying the destination designating means, in the first recording means on the basis of the own terminal ID and the ID for identifying the destination designating means.

Further, in a data transmission program according to the present invention, the program causes the computer to function as:
a second recording means that records transmission authority information, which indicates whether or not a server has an authority to transmit the image file recorded in the first recording means to another recording means, set for each first recording means and for each image display terminal; and
a first transmitting means that transmits the transmission authority information recorded in the second recording means to the image display terminal.

Further, in a data transmission program according to the present invention, the program causes the computer to function as:
a third recording means that records edition authority information, which indicates whether or not the server has an authority to transmit the image file to the first recording means, set for each first recording means and for each image display terminal; and
a second transmitting means that transmits the edition authority information recorded in the third recording means to the image display terminal.

Further, a computer-readable recording medium for recording a data transmission program that causes a computer to function as:
display means that displays an image;
recording means that records an image file of the image to be displayed;
transmission instructing means that instructs transmitting means to transmit the image file of the image to another recording means different from the recording means;
destination designating means that designates a destination of the another recording medium; and
transmitting means that gives an own terminal ID and an ID for identifying the destination designating means to the image file of the image to be transmitted and transmits the image file to an apparatus having the another recording means.

Further, in a computer-readable recording medium for recording a data transmission program according to the present invention, the program causes the computer to function as transmission display means that causes the display means to display information indicating whether or not the displayed image can be transmitted.

Further, in a computer-readable recording medium for recording a data transmission program according to the present invention, the transmission displaymeans causes, when the transmission display means is set to have a transmission authority in transmission authority information indicating whether or not the transmission display means has an authority to transmit an image file displayed on the display means to the another recording means, the display means to display information that indicates that an image of the image file recorded in the first recording means can be transmitted.

Further, in a computer-readable recording medium for recording a data transmission program according to the present invention:
the program causes the computer to function as destination display means that causes the display means to display a destination indicating the another recording means; and
the destination display means causes, when the destination display means is set to have an edition authority in the edition authority information indicating whether or not the destination display means has an authority transmit an image file to the another recording means in the transmission destination of the image file, the display means to display a destination corresponding to the another recording means that corresponds to the edition authority information.

A computer-readable recording medium for recording a data transmission program that causes a computer to function as:
a first recording means that records an image file and is identified on the basis of an own terminal ID of an image display terminal that displays an image and an ID for identifying destination designating means, which designates a destination, provided in the image display terminal and associated with a destination of the recording means in which the image file is to be recorded; and
processing means that records the image file, which is received together with the own terminal ID and the ID for identifying the destination designating means, in the first recording means on the basis of the own terminal ID and the ID for identifying the destination designating means.

Further, in a computer-readable recordingmedium for recording a data transmission program according to the present invention, the program causes the computer to function as:
a second recording means that records transmission authority information, which indicates whether or not the server has an authority to transmit the image file recorded in the first recording means to another recording means, set for each first recording means and for each image display terminal; and
a first transmitting means that transmits the transmission authority information recorded in the second recording means to the image display terminal.

Further, in a computer-readable recording medium for recording a data transmission program according to the present invention, the program causes the computer to function as:
a third recording means that records edition authority information, which indicates whether or not a server has an authority to transmit the image file to the first recording means, set for each first recording means and for each image display terminal; and
a second transmitting means that transmits the edition authority information recorded in the third recording means to the image display terminal.

As described above, according to the present invention, a predetermined recording area on the server is defined as a channel and data is transmitted to this area from the image display terminal.

Note that the transmission referred to in the present invention is a concept including copying, transfer, and movement of data.

The copying means, while keeping data recorded in an original area, recording the data in another area.

The transfer means transmitting data received from another area to other areas.

The movement is to delete data in an original area and record the data in another area.

Note that the transmission in the present invention is not limited to the copying, the transfer, and the movement and may include other processing.

The transmission in the present invention may be processing obtained by arbitrarily combining the copying, the transfer, the movement, and other processing.

Plural channels are prepared and selection of the channels is performed by several buttons on the image display terminal.

A setter sets image display terminals that can share or refer to an area on the server. Through this setting, the image display terminals realize transmission and reception of data.

The sharing of an area means that a predetermined image display terminal permits the other image display terminals to refer to a recording area on its own server.

On the other hand, the reference to an area means that a predetermined image display terminal is allowed to receive data in recording areas on servers of the other image display terminals.

Therefore, when an image display terminals is set to share a predetermined area, from the viewpoint of the other image display terminal on the reference side, the area is an area set to be referred to.

Needless to say, an image display terminal, which is set to share a recording area on its own server, can refer to the recording area.

On the other hand, if two image display terminals are allowed to refer to an area of a server, the transmission of data to a channel is transmission to a partner image display terminal that is one of the image display terminals.

If three image display terminals are allowed to refer to an area of a server, the transmission of data can be regarded as transmission of data to an entire community constituted by the image display terminals.

An image display terminal on a data receiving side does not need to be conscious of which data is sent from whom.

The image display terminal on a data receiving side simply sends a transmission request to the server such that data in an area on the server corresponding to the channel and data of the channel in the image display terminal are always identical with reference to a difference between the data.

Consequently, the image display terminal can receive data from the other image display terminals, personal computers, and the like simply by performing synchronization processing periodically.

A provider offering the service of the present invention can set an area on the server, correspondence among channels of the respective image display terminals, and a sharing authority and a reference authority of a channel for each of the image display terminals in advance according to a request by mail, telephone, or facsimile from a user.

An owner of an image display terminal may request a reliable person, who is accustomed to operation of a personal computer, to register the setting using a personal computer.

Alternatively, the owner of the image display terminal may operate a personal computer by himself/herself to perform the setting.

Consequently, the owner of the image display terminal hardly needs to operate a personal computer and is capable of transmitting an image and a sound to a partner without requiring special knowledge about a personal computer and the Internet.

On the other hand, it is necessary to identify an image display terminal in order to set correspondence of channels of the respective image display terminals and a sharing authority and a reference authority of a channel for each of the image display terminals.

As an example of this identification, it is conceivable to cause the respective image display terminals to store specific identifiers or the like, which cannot be disguised, at the time of shipment from a factory.

Consequently, the server side can identify an image display terminal and operate after checking an authority of the image display terminal with respect to the respective areas to thereby realize security.

It is also possible to set an authority of the image display terminal with respect to an area of the server separately according to whether the authority allows only reading or both reading and writing .

Consequently, when there are two image display terminals, it is possible to allow writing in an area on the server only from one of the image display terminals.

### Brief Description of the Drawings

FIG. 1 is a schematic diagram of a system to which a data transmission system according to an embodiment the present invention is applied;
FIG. 2 is a conceptual diagram of a community in the data transmission system according to the embodiment the present invention;
FIG. 3 is a conceptual diagram of the community in the data transmission system according to the embodiment the present invention;
FIG. 4 is an external view of an image display terminal shown in FIG. 1;
FIG. 5 is a block diagram of the inside of the image display terminal shown in FIG. 1;
FIG. 6 is a block diagram of the inside of a server shown in FIG. 1;
FIG. 7 is a conceptual diagram of information that is recorded in the server shown in FIG. 1;
FIG. 8 is a conceptual diagram of postcards that respective users submit to a service provider in the data transmission system according to the embodiment the present invention;
FIG. 9 is a conceptual diagram of setting information of the image display terminal that is recorded in the server in the data transmission system according to the embodiment the present invention;
FIG. 10 is a conceptual diagram of setting information of the image display terminal that is recorded in the server in the data transmission system according to the embodiment the present invention;
FIG. 11 is a flowchart of an initial operation of the image display terminal in the data transmission system according to the embodiment the present invention;
FIG. 12 is a flowchart showing terminal-side synchronization processing described in S1103 in FIG. 11;
FIG. 13 is a flowchart of an operation of initial setting information reading processing in S1202 shown in FIG. 12;
FIG. 14 is a flowchart of an operation of channel data update processing in S1203 shown in FIG. 12;
FIG. 15 is a flowchart of an operation of the image display terminal in the data transmission system according to the embodiment the present invention, after the initial operation shown in FIG. 11;
FIG. 16 is a flowchart of an operation of terminal-side synchronization processing shown in FIG. 15;
FIG. 17 is a flowchart of an operation of deleted-file list transmission processing in S1602 shown in FIG. 16;
FIG. 18 is a flowchart of an operation of added-file list transmission processing in S1603 shown in FIG. 16;
FIG. 19 is a flowchart of an operation of menu processing described in S1507 in FIG. 15;
FIG. 20 is a schematic diagram of a display screen of the image display terminal at the time of an initial menu display operation in S1901 shown in FIG. 19;
FIG. 21 is a schematic diagram of a display screen of the image display terminal in the data transmission system according to the embodiment the present invention;
FIG. 22 is a flowchart showing an operation of edition processing in S1904 shown in FIG. 19;
FIG. 23 is a schematic diagram of a screen displayed on the image display terminal when the edition processing is performed in S2201 shown in FIG. 22;
FIG. 24 is a flowchart of an operation of transmission processing among processings described in S2202 in FIG. 22;
FIG. 25 is an example of a screen that is displayed on the image display terminal at the time of a display processing operation in S2401 shown in FIG. 24;
FIG. 26 is an example of a screen that is displayed on the image display terminal at the time of the display processing operation in S2401 shown in FIG. 25;
FIG. 27 is a conceptual diagram for explaining an operation in S2405 shown in FIG. 24;
FIG. 28 is a flowchart of an operation of deletion processing among the processings in S2202 shown in FIG. 22;
FIG. 29 is a flowchart of an operation of server-side synchronization processing in the data transmission system according to the embodiment the present invention;
FIG. 30 is a flowchart of an operation performed by a server when the server is requested to send setting information by the image display terminal, in the data transmission system according to the embodiment the present invention;
FIG. 31 is a flowchart of an operation performed when the server receives a deletion request for an image file from the image display terminal, in the data transmission system according to the embodiment the present invention;
FIG. 32 is a flowchart of an operation performed when the server receives an addition request for an image file from the image display terminal, in the data transmission system according to the embodiment the present invention;
FIG. 33 is a flowchart of an operation performed by the server when the image display terminal performs channel data update processing, in the data transmission system according to the embodiment the present invention;
FIG. 34 is a flowchart of an operation performed by the server when the image display terminal performs the channel data update processing, in the data transmission system according to the embodiment the present invention;
FIG. 35 is a conceptual diagram showing functions of the image display terminal and the server in the data transmission system according to the embodiment the present invention;
FIG. 36 is a conceptual diagram showing functions of the image display terminal and the server in the data transmission system according to the embodiment the present invention;
FIG. 37 is a conceptual diagram showing functions of the image display terminal and the server in the data transmission system according to the embodiment the present invention;
FIG. 38 is a conceptual diagram showing functions of the image display terminal and the server in the data transmission system according to the embodiment the present invention; and
FIG. 39 is a schematic diagram in a case in which the image display terminal used in the data transmission system according to the embodiment the present invention is incorporated in a refrigerator.

### Best Mode for carrying out the Invention

A best mode for carrying out the present invention will be hereinafter explained. An embodiment to be described below is an example and the present invention is not limited to a configuration of the embodiment.

The following explanation of a data transmission system according to an embodiment the present invention also serves as explanations of an image display terminal, a server, a data transmission method, a data transmission program, and a computer readable recording medium having recorded therein the data transmission program, according to the embodiment of the present invention.

### (Embodiment of a data transmission system)

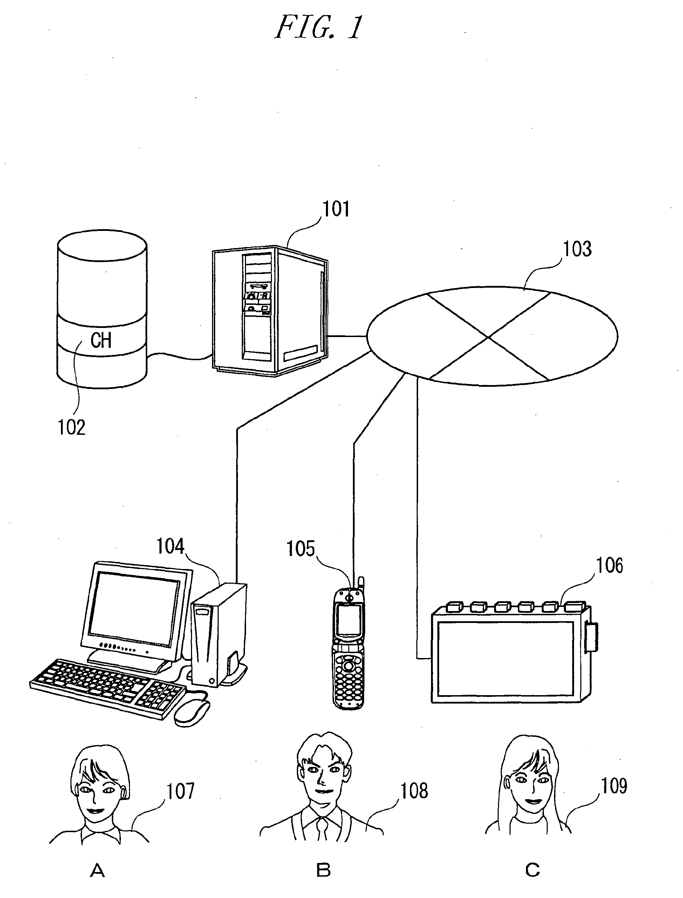

FIG. 1 shows a schematic diagram of a system to which a data transmission system according to an embodiment the present invention is applied.

The system shown in FIG. 1 includes a server 101 including an area 102 for recording an image file and a personal computer 104, a cellular phone 105, and an image display terminal 106 that are connected to the server 101 through a network 103.

The data transmission system according to the present invention is a system that makes it possible to transmit data such as an image file from the image display terminal 106 to the server 101 by only a button operation, without a keyboard operation.

The personal computer 104 is used by a user A 107.

The cellular phone 105 is used by a user B 108.

The image display terminal 106 is used by a user C 109.

The personal computer 104, the cellular phone 105, and the image display terminal 106 can share or refer to the area 102 of the server 101.

The sharing of the area 102 means that an administrator of the area 102 allows, for example, accesses from other apparatuses or terminals to the area 102.

Making it possible to refer to the area 102 means allowing access to data in areas managed by other administrators.

The personal computer 104, the cellular phone 105, and the image display terminal 106 receives data such as an image file from the server 101.

In an example shown in FIG. 1, one server 101, one personal computer 104, one cellular phone 105, and one image display terminal 106 are shown. However, the present invention is not limited to such a case.

In the data transmission system according to the present invention, at least one server 101 and at least one image display terminal 106 only have to be provided.

Other personal computers, cellular phones, and image display apparatuses, which are not allowed to share or refer to data such as an image file in the area 102 may be connected to the network 103.

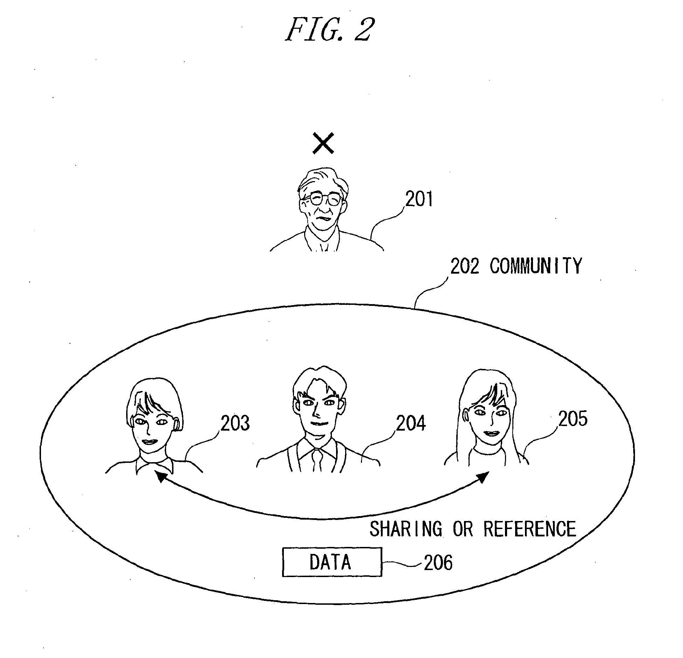

Next, a community in the data transmission system according to the embodiment the present invention will be explained with reference to FIG. 2. FIG. 2 is a conceptual diagram of the community in the data transmission system according to the embodiment the present invention.

As shown in FIG. 2, a group of plural persons having an object of sharing or referring to data is called a community.

In an example shown in FIG. 2, for example, a user 203, a user 204, and a user 205 form a community 202 and are allowed to share or refer to data 206.

On the other hand, since a user 201 does not belong to the community 202, the user 201 is never allowed to share or refer to the data 206.

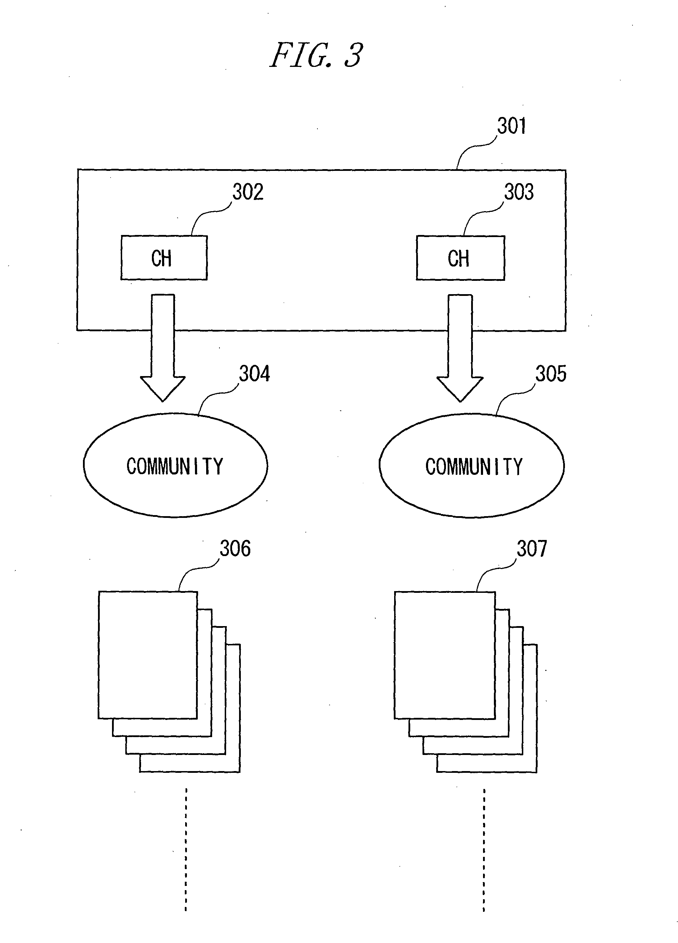

Next, the community in the data transmission system according to the embodiment the present invention will be explained more in detail with reference to FIG. 3. FIG. 3 is a conceptual diagram of the community in the data transmission system according to the embodiment the present invention.

As shown in FIG. 3, at least one or more usable channels (CHs) 302 and 303 are given to a terminal 301 constituting the data transmission system in this embodiment. The number of channels to be given is not specifically limited.

The channels correspond to areas on a server.

The terminal 301 is, for example, an image display terminal, a personal computer, or a cellular phone.

Communities 304 and 305 correspond to the channels 302 and 303, respectively.

For example, at least one or more image files 306 correspond to the community 304.

For example, at least one or more image files 307 correspond to the community 305.

Therefore, image files correspond to respective channels of the terminal 301 via communities.

The communities shown in FIG. 3 may be associated with channels of other terminals.

In this way, the terminal constituting this embodiment makes it possible to share image files with other terminals or refer to image files from other terminals via communities.

It is needless to mention that not only image data but also other data such as audio data can be associated with the communities.

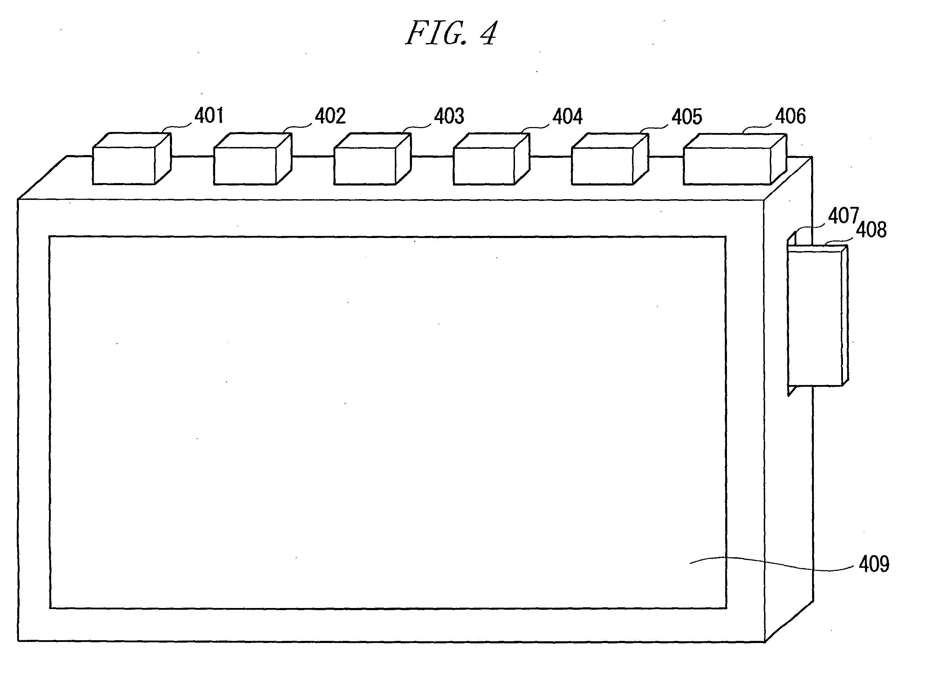

Next, the image display terminal shown in FIG. 1 will be explained with reference to FIG. 4. FIG. 4 is an external view of the image display terminal shown in FIG. 1.

As shown in FIG. 4, the image display terminal includes six buttons 401, 402, 403, 404, 405, and 406.

The image display terminal also includes a recording medium interface unit 407 that serves as an interface for a recording medium 408.

The image display terminal also includes a display unit 409 that displays images and information.

The buttons 401, 402, 403, 404, and 405 are buttons corresponding to channels.

The button 406 is a menu button.

Note that the image display terminal used in the present invention is not limited to the case in which there are six buttons as shown in FIG. 4. At least three or more buttons have to be provided. The three buttons consist of at least two or more channel buttons and at least one or more menu buttons.

The recording medium interface unit 407 is an interface into which the recording medium 408 is to be inserted.

The recording medium 408 is a medium for recording an image file and other information to be displayed on the display unit 409. The recording medium 408 is not specifically limited in the present invention and an arbitrary medium may be used as the recording medium 408.

The display unit 409 may be in color or in black and white. For example, a liquid crystal display unit can be cited as an example of the display unit 409.

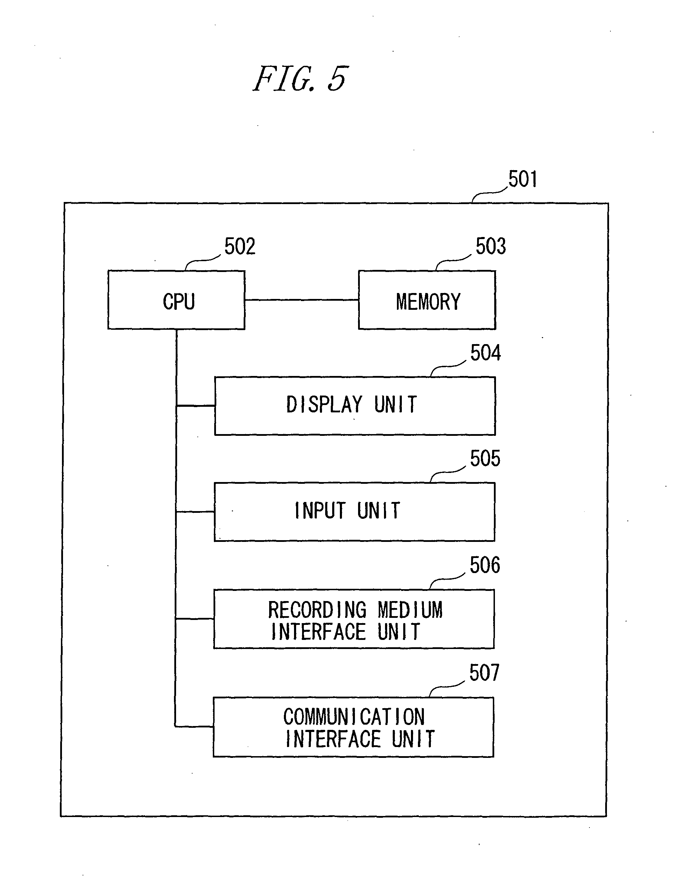

Next, an internal structure of the image display terminal shown in FIG. 1 will be explained with reference to FIG. 5. FIG. 5 is a block diagram of the inside of the image display terminal shown in FIG. 1.

This image display terminal 501 includes a CPU 502 that executes a program and a memory 503 that stores the program to be executed by the CPU 502 and data to be processed by the CPU 502.

The image display terminal 501 also includes a display unit 504 that displays information such as images, menus, and messages.

The image display terminal 501 also includes an input unit 505 constituted by buttons.

The image display terminal 501 also includes a recording medium interface unit 506 into which a recording medium is to be inserted.

The image display terminal 501 also includes a communication interface unit 507 for accessing a network.

This communication interface unit 507 accesses the network and communicates with other terminals and servers on the network according to a command of the CPU 502.

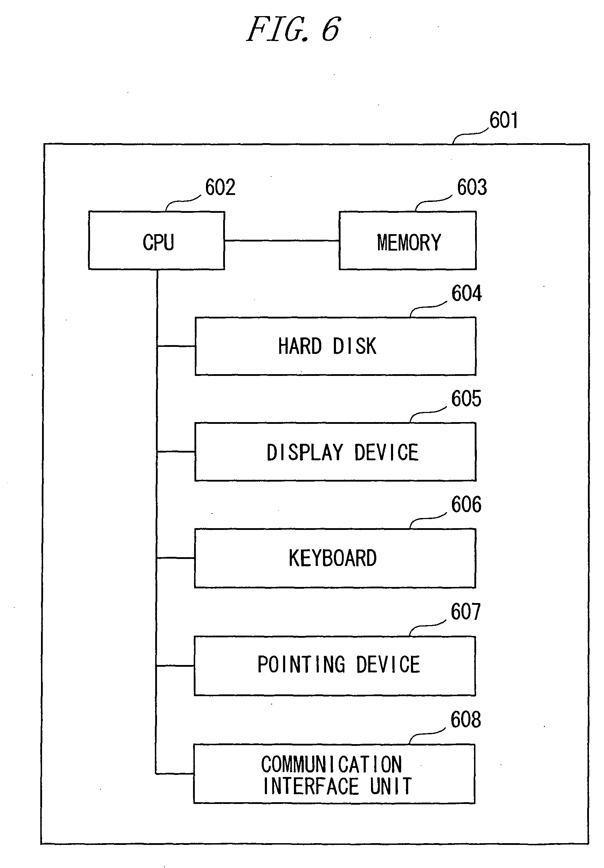

Next, an internal structure of the server shown in FIG. 1 will be explained with reference to FIG. 6. FIG. 6 is a block diagram of the inside of the server shown in FIG. 1.

A server 601 includes a CPU 602 that executes a program and a memory 603 that records the program to be executed by the CPU 602 and data to be processed by the CPU 602.

The server 601 also includes a hard disk 604 that records a program and data and a display device 605 that displays information such as menus, icons, and messages.

The server 601 also includes a keyboard 606 for inputting text data and a pointing device 607 for operating the menus and the icons on the display device 605.

The server 601 also includes a communication interface unit 608 that accesses a network.

The CPU 602 executes the program recorded in the memory 603 and provides a function as a server.

The memory 603 records the program to be executed by the CPU 602 and the data to be processed by the CPU 602.

The hard disk 604 records the program to be executed by the CPU 602, the data to be processed by the CPU 602, and the like.

Note that the program to be executed by the CPU 602, the data to be processed by the CPU 602, and the like may be recorded in appropriate recording media such as a CD-ROM and a DVD-ROM other than the memory 603 and the hard disk 604.

Therefore, in this case, the server may include a reading device (not shown) for the recording media such as the CD-ROM and the DVD-ROM.

This hard disk 604 constitutes a database of the server 601.

However, in the present invention, the database of the server is not only constituted by the hard disk 604 but also constituted by, for example, a database server connected to the server.

The display device 605 displays information inputted by a user and information such as menus, icons, and messages of a program developed by the user. For example, a CRT, a liquid crystal display, and the like are used as the display device 605.

The keyboard 606 is used for inputting text data. The pointing device 607 is used for operating the menu and the icon displayed on the display device 605.

As the pointing device 607, for example, a mouse, a track ball, an electrostatic pointing device, a laser pointing device, and a touch panel can be used.

The communication interface 608 accesses the network and communicates with other apparatuses and terminals on the network according to a command of the CPU 602.

Note that the internal structures of the personal computer and the cellular phone shown in FIG. 1 are not different from the internal structures of a personal computer and a cellular phone that have been generally used. Thus, detailed explanations of the structures are omitted.

### <Method of setting correspondences between an image display terminal and respective channels on a server>

Next, a method of setting correspondences between an image display terminal and respective channels on a server will be explained.

First, in order to identify what kind of user uses respective devices of the image display terminal, it is necessary to associate a user ID having uniqueness for identifying the respective devices of the image display terminal with personal information of a user who uses the image display terminal.

Examples of the personal information of the user include a name, an address, and an email address of the user, names of respective channels, and numbers of communities corresponding to the respective channels.

There are the following two methods as a registration procedure for the user to identify the user.
1. In a case in which the user ID having uniqueness is written in advance in the image display terminal in a factory and shipped:
   the method is further divided into two methods.

   As one of the methods, after a user purchases an image display terminal, the user writes down a user ID, which is displayed on a screen when the user turns on the image display terminal for the first time, and send the user ID together with the personal information by an enclosed registration postcard or the like to a provider which provides an image sharing service.
   As the other one of the methods , a code, which forms a pair with the user ID of the image display terminal, is printed on a registration postcard in advance before shipment to be enclosed with the image display terminal, and a user writes and fills out the registration postcard with one's personal information and sends the registration postcard to a provider of a service.
2. In the case in which an ID, which indicates that a user ID has not been set yet, such as 0, is written in an image display terminal in a factory to be shipped:
   after a user purchases an image display terminal, when the user turns on the image display terminal, if a user ID is not recorded in the image display terminal, the image display terminal sends a command for requesting issuance of a user ID to a server.

The server dynamically generates a user ID having uniqueness and returns the user ID to the image display terminal to cause the image display terminal to record the user ID.

In doing so, the image display terminal displays the user ID on a screen in a form of a character string. Thereafter, as in the case of 1 above, the image display terminal urges the user to copy the user ID on a registration postcard and send the registration postcard to a service provider.

In either of the cases, anticipating a loss of the postcard, it is desirable to provide a user with means for displaying the user ID (e.g., turning on the image display terminal in a state in which a specific button is pressed).

The service provider, which has received the registration post card, generates a user reference ID, which is used for specifying a partner user in sharing or referring to a community, based on the user ID.

Here, sharing a community means allowing another apparatus to display a content of one's community.

Referring to a community means displaying a community of others in one's channel.

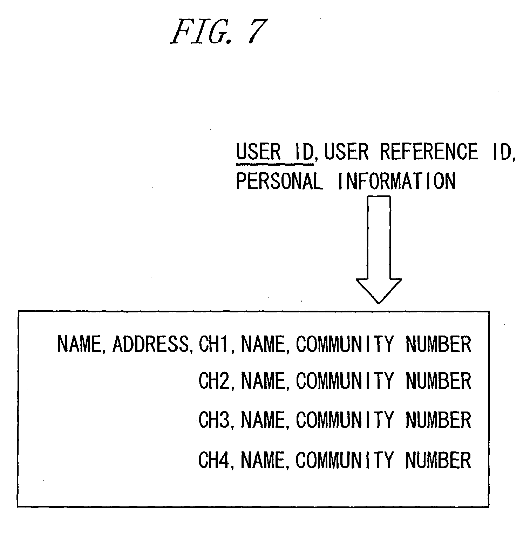

Through the operations described above, information shown in FIG. 7 is recorded in a server of the service provider such as the server shown in FIG. 1. FIG. 7 is a conceptual diagram of information to be recorded in the server shown in FIG. 1.

As shown in FIG. 7, a user reference ID and personal information are recorded in the server, based on an ID for identifying the image display terminal.

In the personal information, a name and an address of a user, names of respective channels, community numbers corresponding to the respective channels, and the like are recorded.

The service provider prints the user reference ID on plural stickers or the like and returns the stickers to the user.

The user reference ID is printed on the stickers for the purpose of preventing mistakes and labor when the user copies the user ID and the user reference ID for various kinds of registration.

It is needless to mention that other methods may be adopted as a method of sending the user reference ID in the data transmission system according to the present invention.

The server reference ID is used for the purpose of preventing piracy of the user ID and preventing the user ID from being directly deduced from the user reference ID.

The user can convert the user reference ID into the user ID using a conversion table.

Next, an operation in establishing sharing of or reference to a community between certain two users will be explained.

From the viewpoint of security, it is desirable to make it possible to establish sharing of or reference to a community between two users only when both of the users register own user IDs and user reference IDs of the partners in a service provider.

In this case, the two users, who are to be allowed to share or refer to a certain area, are required to notify each other of one's reference IDs.

This notification of the user reference IDs is possible by means of exchanging the user reference IDs by telephone, facsimile, or the like, or sending the user reference IDs to the partners by mail using the stickers described above.

In order to register establishment of a sharing or reference state of a community between the two users in the server, it is sufficient to provide the server with information on which channel of whom and which channel of whom are shared or which channel of whom is referred to by which channel of whom.

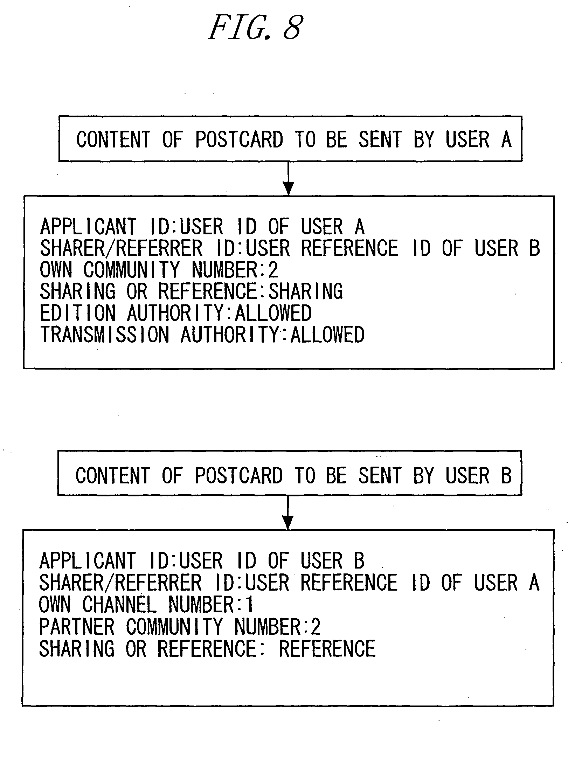

Therefore, for example, contents of an application postcard submitted to a service provider are as shown in FIG. 8. FIG. 8 is a schematic diagram of postcards that respective users submit to a service provider in the data transmission system according to the embodiment the present invention.

As contents of a postcard to be sent by a user A, an applicant ID: a user ID of the user A, a sharer/referrer ID: a user reference ID of a user B, the user A's community number: 2, sharing or reference: sharing, an edition authority: possible, and a transmission authority: possible are displayed.

As contents of a postcard to be sent by the user B, an applicant ID: a user ID of the user B, a sharer/referrer ID: a user reference ID of the user A, the user B's channel number: 1, a community number of a partner: 2, sharing or reference: reference are displayed.

When the contents of the postcards of the user A and the user B are both registered, the content of the community 2 of the user A is also displayed in the channel 1 of the user B. A manufacturer does not always have to perform these settings. The respective users may electronically apply for the information described above using Internet browsers of personal computers or persons who are in a position accessible to the respective pieces of information may act for the users.

For example, when the respective users electronically apply for the information using Internet browsers of personal computers, the users use PC login accounts, which are given when the users purchase image display terminals, to access the server of the service provider and make the setting shown in FIG. 8 possible.

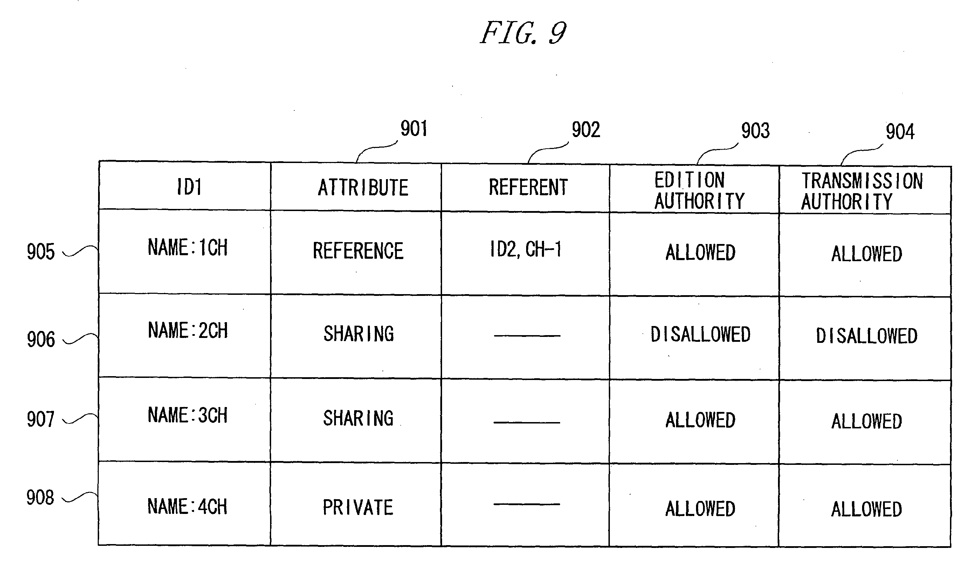

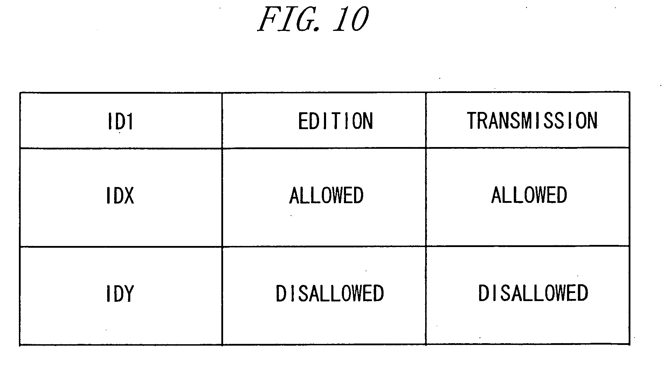

Setting information of an image display terminal, which is recorded in the server after the setting is performed, will be explained with reference to FIGS. 9 and 10. FIGS. 9 and 10 are conceptual diagrams of setting information of an image display terminal to be recorded in the server in the data transmission system according to the embodiment the present invention.

For example, as shown in FIG. 9, setting information of an image display terminal, in which a user ID thereof is indicated by ID1, includes information of a 1 channel (CH) 905, a 2 channel (CH) 906, a 3 channel (CH) 907, and a 4 channel (CH) 908.

One of the areas, in which data on a server are stored, is designated by the user ID and the channel number of the image display terminal.

In other words, a channel in one row shown in FIG. 9 corresponds to one area on the server in which data are stored.

Names set by a user of the image display terminal are given to respective channels. It is needless to mention that such a name does not have to be given to any one of the channels.

In the setting information shown in FIG. 9, an attribute 901, a referent 902, an edition authority 903 , and a transmission authority 904 are set.

As the attribute 901, reference, sharing, and private can be cited as examples.

The reference indicates that an area of another image display terminal, in which data is stored, are referred to rather than an area of the own server in which data is stored.

In the case of the reference, a user ID and a channel number of another image display terminal are registered in the referent 902.

Therefore, if the setting information shown in FIG. 9 is present, even if the attribute thereof is reference, a user ID and a channel number of a referent is identified according to a one's an own user ID and an own channel number, whereby it is possible to specify an area on the server, in which data is stored, corresponding to the referent.

The sharing indicates that someone is allowed to refer to an area on the server in which data is stored.

In the case of the sharing, control is performed on who is allowed to refer to the area in what kind of state, according to the setting information shown in FIG. 10.

The private indicates that an area on the server, in which data is stored, is accessible only from a one' s image display terminal, a personal computer using a PC account, and the like.

The edition authority 903 is information indicating whether it is possible to apply edition to an area on the server, in which data is stored, to be accessed by a pertinent channel.

As the edition, for example, there is processing for recording image file in the area on the server in which data is stored.

In addition, as the edition, processing such as rotation and deletion of an image file recorded in the area on the server, in which data is stored, can be cited as examples.

The transmission authority 904 is information indicating whether an image display terminal has an authority to transmit data such as an image file recorded in an area on the server in which data is stored.

In other words, the transmission authority 904 is information indicating whether an image display terminal has an authority to, for example, copy, transfer, and move data such as an image file recorded in an area on the server in which data is stored.

The transmission authority does not have to be set specifically. Transmission in all channels may be allowed unconditionally or transmission in all channels except a channel of a recording medium may be disallowed.

Note that, in an example shown in FIG. 9, it is explained whether an image display terminal has an edition authority and whether the image display terminal has a transmission authority with respect to a shared area indicated by a channel.

However, in the present invention, it is also possible to specify whether or not to provide an edition authority and a transmission authority for each personal computer or each cellular phone, with respect to an area on the server, in which data is stored, designated by a user ID and a channel number of an image display terminal.

Next, the setting information in the case in which an area on the server, in which data is stored, is set to be shared in FIG. 9 will be explained with reference to FIG. 10.

As shown in FIG. 10, in the case of sharing, control is performed on who is allowed to refer to the area in what kind of state, according to the setting information shown in FIG. 10.

In an example shown in FIG. 10, an image display terminal, a user ID of which is indicated by ID1 , permits image display terminals, user IDs of which are IDX and IDY, to refer to an area in the image display terminal.

The image display terminal indicated by the user ID1 provides the image display terminal, a user ID of which is indicated by IDX with an edition authority and a transmission authority.

The image display terminal indicated by the user ID1 does not provide the image display terminal, a user ID of which is indicated by IDY with an edition authority and a transmission authority.

In the case of sharing, for example, setting may be made to permit a person, who accesses an image display terminal from a personal computer using a predetermined PC account, to share an area of the personal computer.

### (Explanation of operations in this embodiment)

Next, operations in the data transmission system according to the embodiment the present invention will be explained. <Operation of an image display terminal>

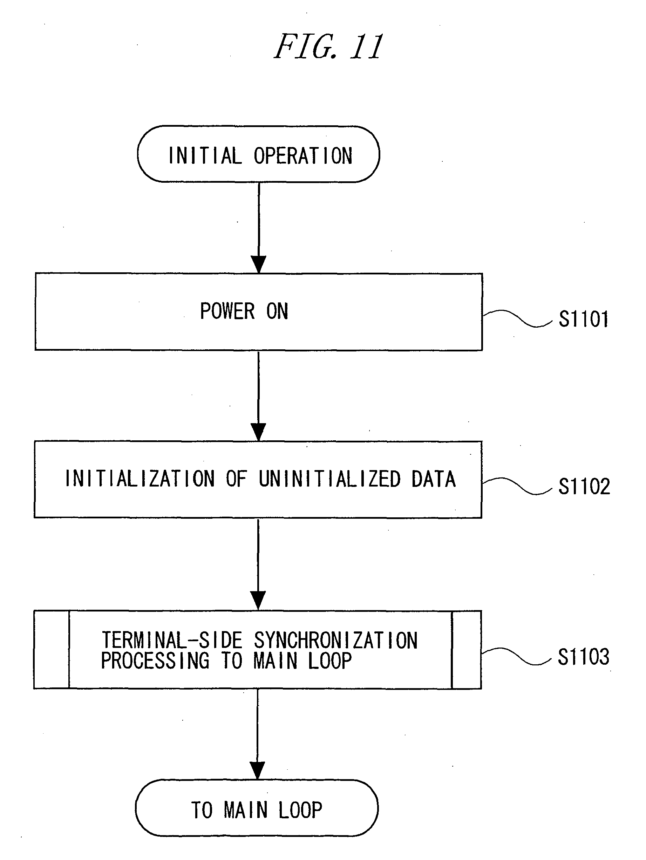

FIG. 11 is a flowchart of an initial operation of an image display terminal in the data transmission system according to the embodiment the present invention.

In the initial operation of the image display terminal, after the image display terminal is turned on, initialization of uninitialized data is performed (S1101 and S1102).

Subsequently, terminal-side synchronization processing is performed (S1103).

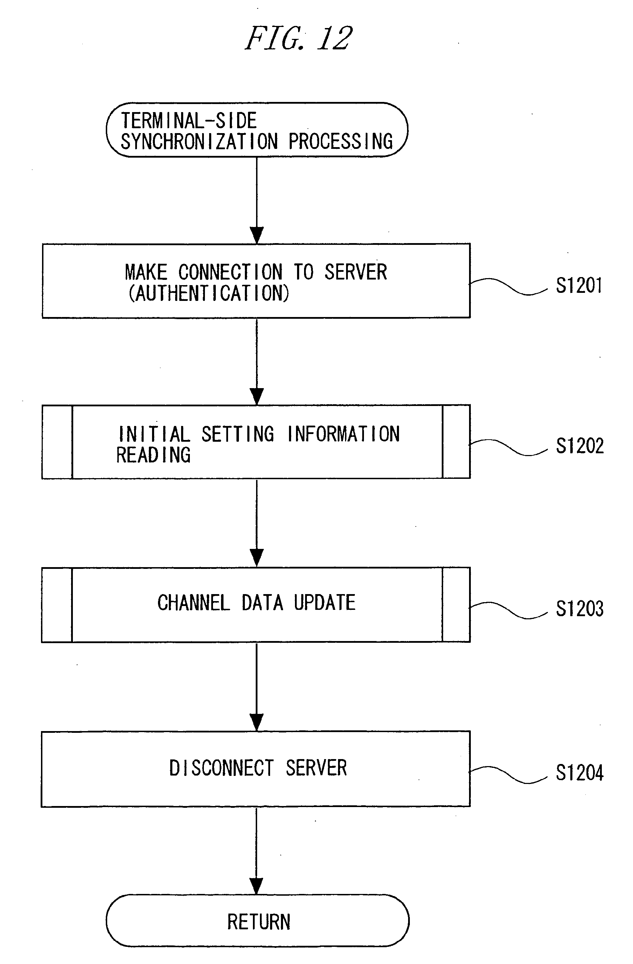

The terminal-side synchronization processing described in S1103 will be explained with reference to FIG. 12. FIG. 12 is a flowchart showing the terminal-side synchronization processing described in S1103 in FIG. 11.

In the terminal-side synchronization processing, first, the image display terminal makes connection to a server and performs authentication processing (S1201).

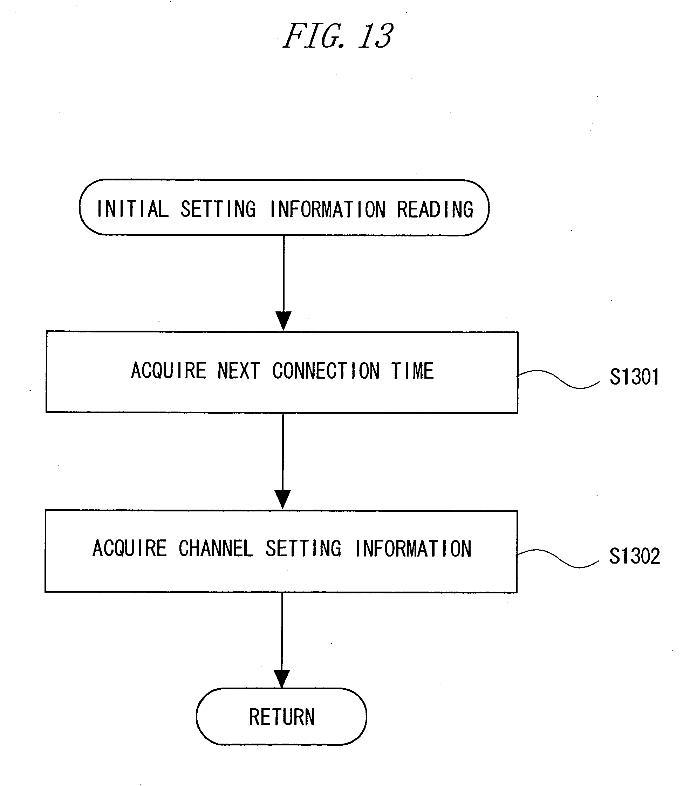

Subsequently, the image display terminal reads initial setting information from the server (S1202). This operation for reading initial setting information will be described later with reference to a flowchart shown in FIG. 13.

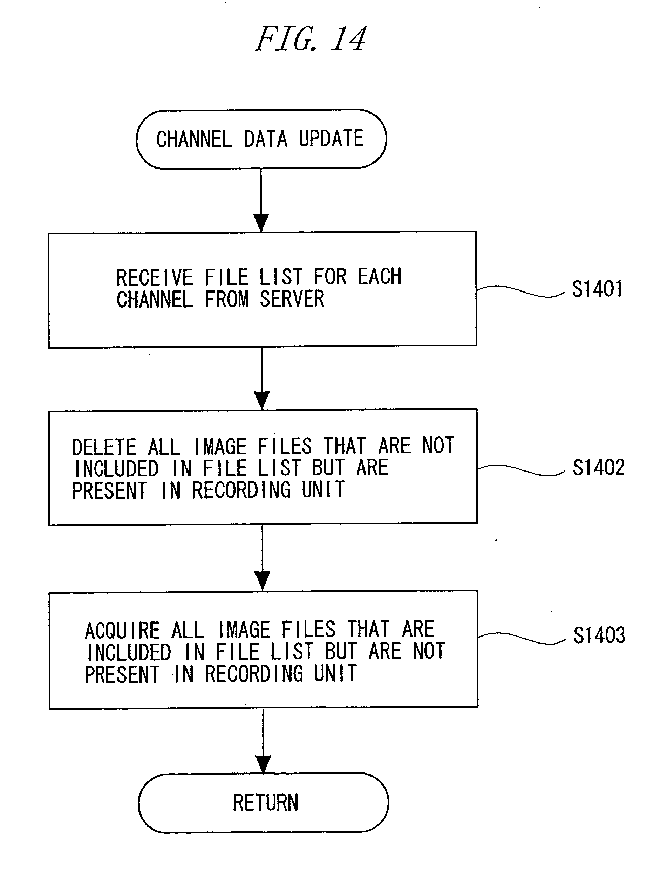

Subsequently, the image display terminal updates channel data (S1203). This processing for updating channel data will be described later with reference to a flowchart shown in FIG. 14.

When the operation described above ends, the image display terminal cuts the connection with the server (S1204).

Next, the processing for reading initial setting information in S1202 shown in FIG. 12 will be explained with reference to FIG. 13. FIG. 13 is a flowchart of an operation of the processing for reading initial setting information in S1202 shown in FIG. 12.

In the operation for reading initial setting information, the image display terminal acquires next connection time (S1301).

Subsequently, the image display terminal acquires setting information of respective channels recorded in the server (S1302).

The setting information to be acquired in this case is, for example, name information, attribute information and referent information of the respective channels, information on an edition authority of the respective channels, and information on a transmission authority of the respective channels.

Therefore, when the operation for reading initial setting information is performed, information same as the information shown in FIG. 9 is recorded in the image display terminal.

Next, the processing for updating channel data in S1203 shown in FIG. 12 will be explained with reference to FIG. 14. FIG. 14 is a flowchart of an operation of the processing for updating channel data in S1203 shown in FIG. 12.

In the processing for updating channel data, the image display terminal receives a file list from the server for each of the channels (S1401).

The image display terminal then deletes all image files , which are not included in the received file list but are present in a recording unit of the image display terminal, from the recording unit (S1402).

Subsequently, the image display terminal acquires image files of images, which are included in the file list but is not present in the recording unit, from the server (S1403).

Through this processing for updating channel data, image files in the recording unit corresponding to the respective channels of the image display terminal and image files in the recording unit corresponding to the respective channels of the server coincide with each other.

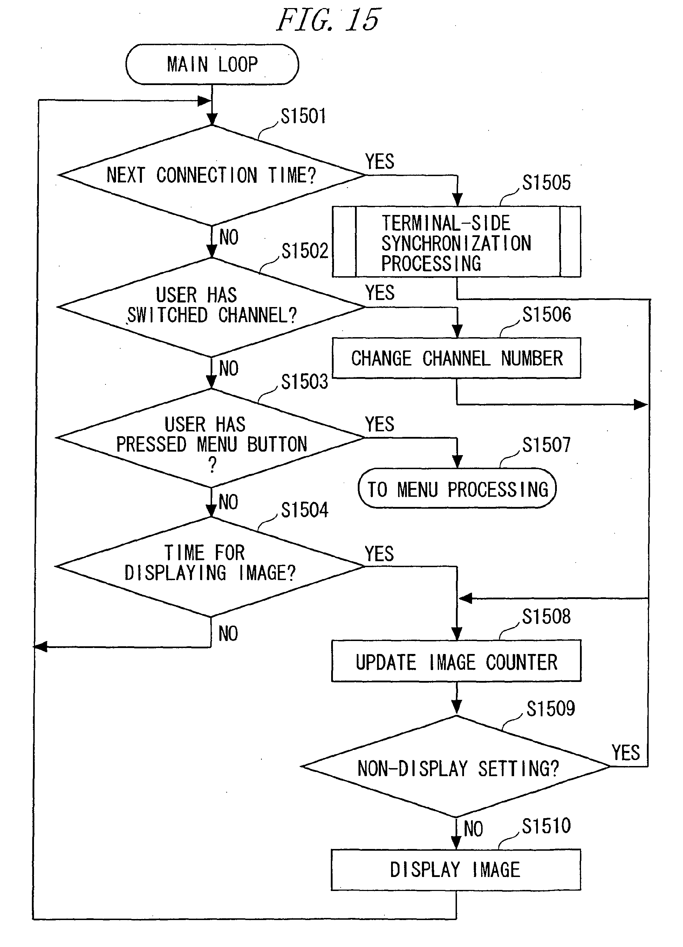

Next, an operation of the image display terminal after the initial operation shown in FIG. 11 will be explained with reference to FIG. 15. FIG. 15 is a flowchart of an operation of the image display terminal in the data transmission system according to the embodiment the present invention after the initial operation shown in FIG. 11.

First, the image display terminal judges whether the present time is the next connection time (S1501). If the present time is the next connection time (Yes), the image display terminal shifts its process to S1505. If the present time is not the next connection time (No), the image display terminal shifts its process to S1502.

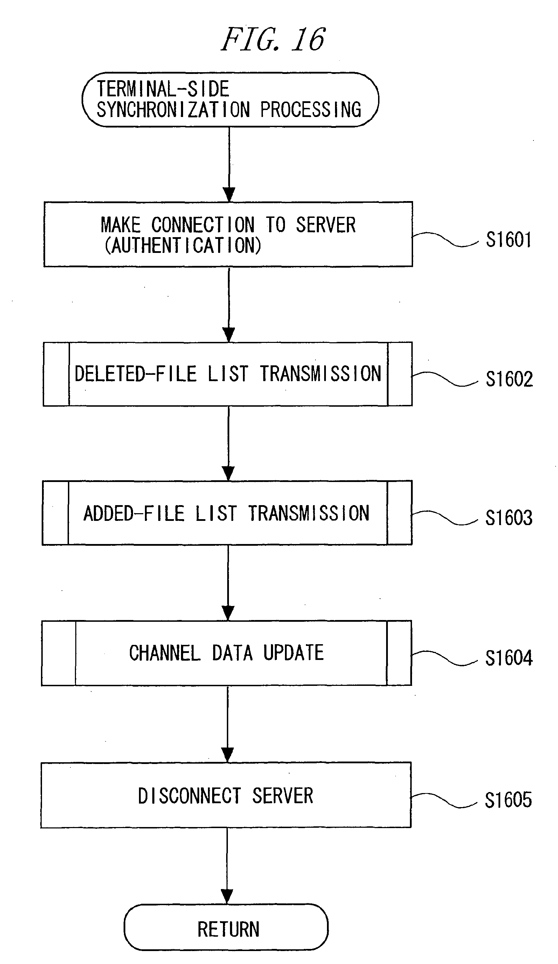

Terminal-side synchronization processing in S1505 will be described later with reference to FIG. 16.

In S1502, the image display terminal judges whether a user has switched a channel.

If the user has switched a channel (Yes), the image display terminal shifts its process to S1506. If the user has not switched a channel (No), the image display terminal shifts its process to S1503.

In S1506, the image display terminal changes a channel number and, then, shifts its process to S1508.

Subsequently, in S1503, the image display terminal judges whether the user has pressed a menu button.

When the user pressed the menu button (Yes), the image display terminal shifts its process to S1507. If the user has not pressed the menu button (No), the image display terminal shifts its process to S1504 .

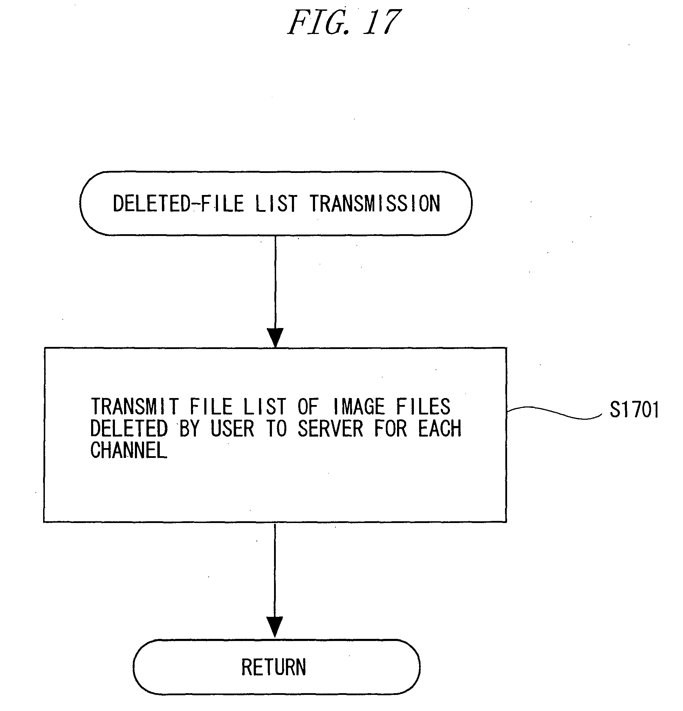

Menu processing in S1507 will be described later with reference to a flowchart shown in FIG. 17.

In S1504 , the image display terminal judges whether it is time for displaying an image. If it is the time for displaying an image (Yes), the image display terminal shifts its process to S1508. If it is not the time for displaying an image (No), the image display terminal shifts its process to S1501.

In S1508, the image display terminal updates an image counter.

Subsequently, in 51509, the image display terminal judges whether an image shown in the updated image counter is an image that is set as non-display.

If the image is an image that is set as non-display (Yes), the image display terminal shifts its process to S1508.

On the other hand, when the image is an image that is not set as non-display, the image display terminal shifts its process to S1510.

In S1510, the image display terminal displays the image on the display unit, and then shifts its process to S1501.

Next, the terminal-side synchronization processing described in S1505 in FIG. 15 will be explained with reference to FIG. 16. FIG. 16 is a flowchart of an operation of the terminal-side synchronization processing shown in FIG. 15.

In the terminal-side synchronization processing, first, the image display terminal makes connection to the server and performs authentication processing (S1601).

Subsequently, the image display terminal transmits a deleted-file list and an added-file list to the server (S1602 and S1603).

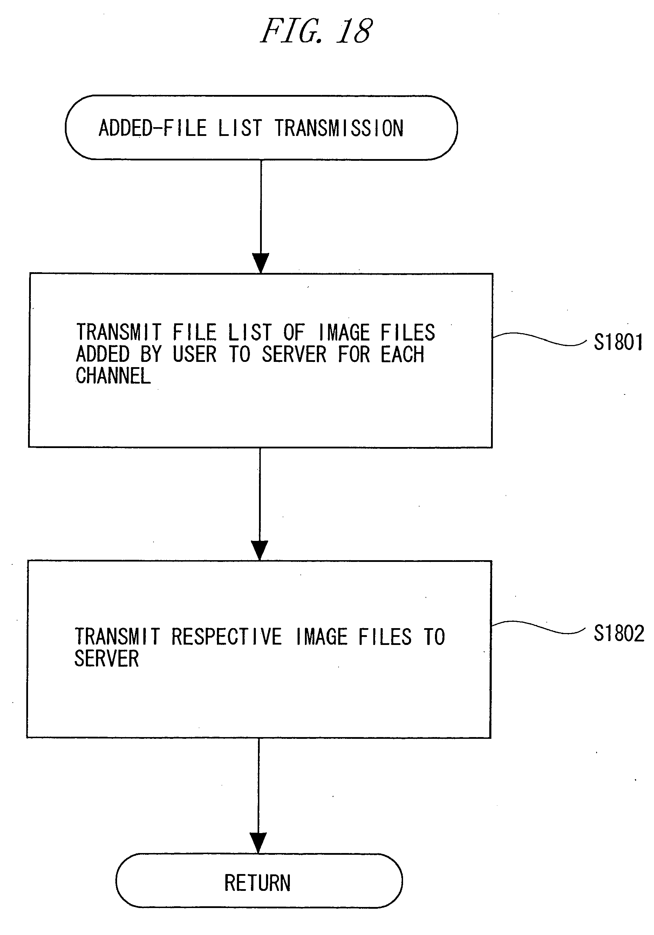

This operation for transmitting the deleted-file list and the added-file list to the server will be described later with reference to FIGS. 17 and 18, respectively.

Subsequently, the image display terminal updates channel data (S1604). Since this processing for updating channel data is the same as the operation described in the flowchart shown in FIG. 14, an explanation of the processing is omitted.

When the operation described above ends, the image display terminal cuts the connection with the server (S1605).

Next, processing for transmitting the deleted-file list in S1602 shown in FIG. 16 will be explained with reference to FIG. 17. FIG. 17 is a flowchart of an operation of the processing for transmitting the deleted-file list in S1602 shown in FIG. 16.

As shown in FIG. 17, in transmitting the deleted-file list to the server, the image display terminal transmits a list of image files deleted by the user to the server for each channel (51701) .

Next, processing for transmitting the added-file list in 51603 shown in FIG. 16 will be explained with reference to FIG. 18. FIG. 18 is a flowchart of an operation of the processing for transmitting the added-file list in S1603 shown in FIG. 16.

As shown in FIG. 18, in transmitting the added-file list to the server, the image display terminal transmits a list of image files added by the user to the server for each channel (S1801).

Subsequently, the image display terminal transmits the respective added image files to the server (S1802).

Next, a case in which the user has switched a channel in S1502 will be explained. In this case, in S1506, the image display terminal changes a channel number.

The image display terminal then shifts its process to S1508, updates the image counter, and shifts its process to S1509.

In S1509, the image display terminal judges whether an image shown in the updated image counter is set as non-display. If the image is set as non-display, the image display terminal shifts its process to S1508. If the image is not set as non-display, the image display terminal shifts its process to S1510.

In 51510 , the image display terminal displays the image shown in the image counter on the display unit, and then shifts its process to S1501.

Subsequently, in S1503, the image display terminal judges whether a user has pressed a menu button.

If the user has not pressed the menu button (No), the image display terminal shifts its process to S1504.

In S1504, the image display terminal judges whether it is time for displaying an image. If it is the time for displaying an image (Yes), the image display terminal shifts its process to S1508. If it is not the time for displaying an image (No), the image display terminal shifts its process to S1501.

On the other hand, in S1503, if the user has pressed the menu button (Yes), the image display terminal shifts its process to S1507 and performs menu processing.

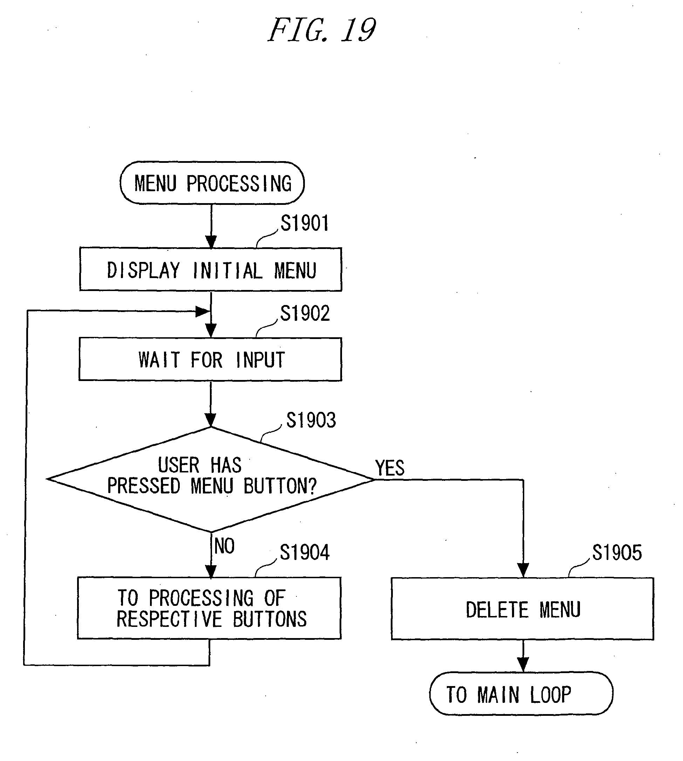

This menu processing in S1507 will be explained with reference to FIG. 19. FIG. 19 is a flowchart of an operation of the menu processing described in S1507 in FIG. 15.

As shown in FIG. 19, in the case of the menu processing, the image display terminal displays an initial menu on the display unit (S1901).

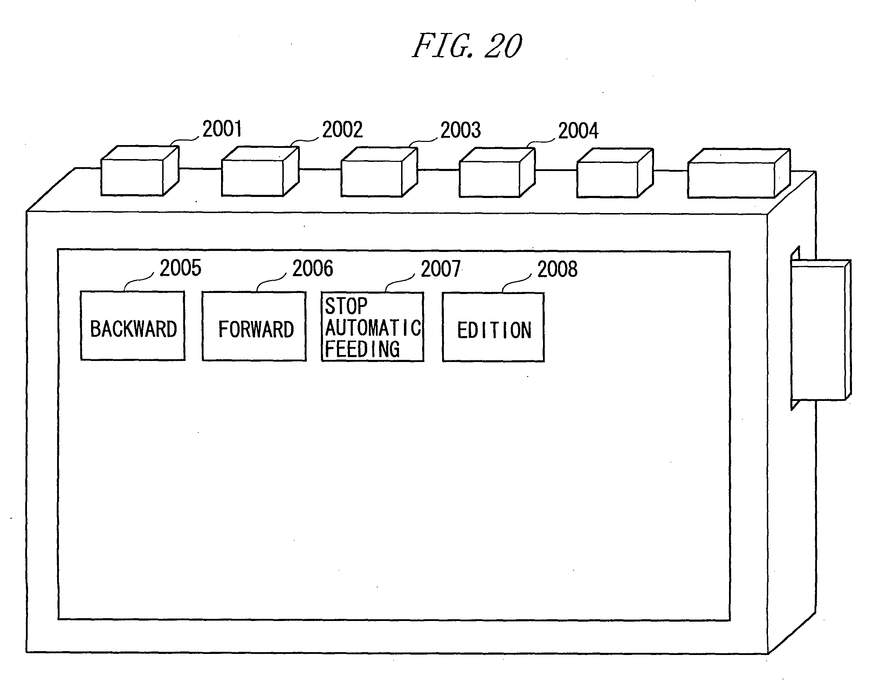

The display of the initial menu will be explained with reference to FIG. 20. FIG. 20 is a schematic diagram of a display screen of the image display terminal in an initial menu display operation in S1901 shown in FIG. 19.

As shown in FIG. 20, respective items 2005, 2006, 2007, and 2008 are displayed in positions corresponding to respective buttons 2001, 2002, 2003, and 2004 as the initial menu.

For example, the item "backward" 2005 is displayed on a screen below the button 2001.

"Backward" is processing for displaying a screen immediately preceding a currently displayed screen.

The item "forward" 2006 is displayed on a screen below the button 2002.

"Forward" is processing for displaying the next screen.

The item "automatic feed stop" 2007 is displayed on a screen below the button 2003.

"Automatic feed stop" is processing for stopping automatic feed of a slide show to display a currently shown screen permanently. When the slide show has already been stopped, "automatic feed restart" is displayed. After the user presses the button 2003, the menu disappears.

The item "edition" 2008 is displayed below the button 2004.

"Edition" is processing for shifting to an edition menu.

The user selects the above-mentioned processings by pressing the buttons corresponding to the processings, respectively.

Note that, in an example shown in FIG. 20, the items corresponding to the respective buttons are displayed below the buttons. However, the present invention is not limited to such a case.

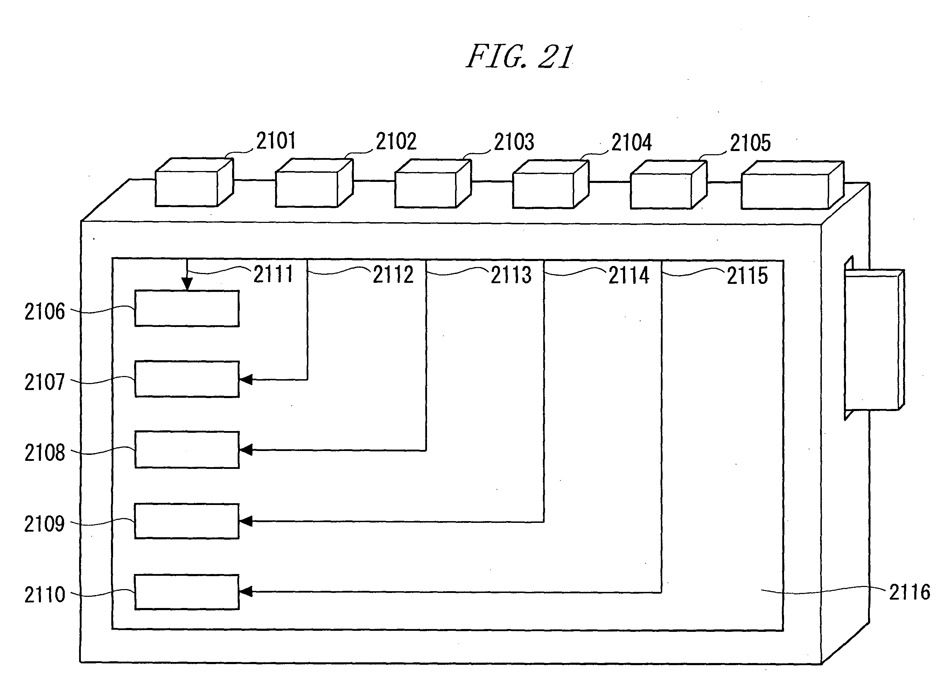

For example, as shown in FIG. 21, the respective buttons and selection items on the screen may be associated with one another by arrows. FIG. 21 is a schematic diagram of a display screen of the image display terminal in the data transmission system according to the embodiment the present invention.

In FIG. 21, the buttons 2101, 2102, 2103, 2104, and 2105, and items 2106, 2107, 2108, 2109, and 2110 correspond to one another, respectively.

A clear correspondence between the respective buttons and the respective items is indicated by arrows 2111, 2112, 2113, 2114, and 2115, on a screen 2116.

In this way, in the data transmission system of the present invention, buttons of the image display terminal and items on a screen are associated with one another.

The user can select the items simply by pressing the corresponding buttons.

The correspondence between the buttons and the items is not specifically limited.

Next, the operation of the image display terminal shown in FIG. 19 will be explained again.

As shown in FIG. 19, after displaying the initial menu, the image display terminal waits for an input (S1902).

The image display terminal judges whether the user has pressed the menu button. If the menu button has been pressed (Yes), the image display terminal shifts its process to S1905 to erase the menu, and the process returns to a main loop shown in FIG. 15.

On the other hand, if the user has not pressed the menu button (No), the image display terminal shifts its process to S1904 and performs processing of the respective buttons.

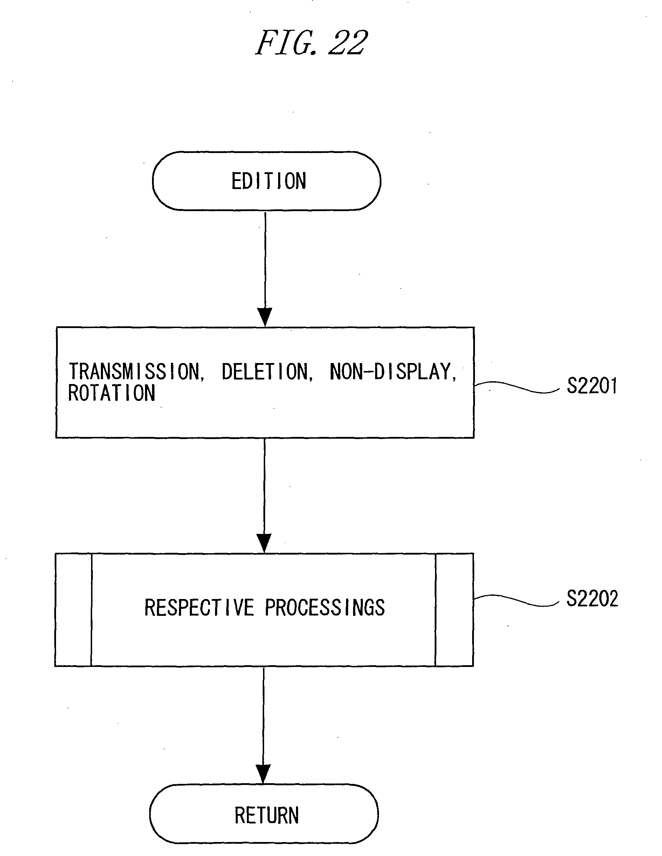

A case in which the edition button is pressed as the processing in S1904 will be explained with reference to FIG. 22. FIG. 22 is a flowchart describing an operation of edition processing in 51904 shown in FIG. 19.

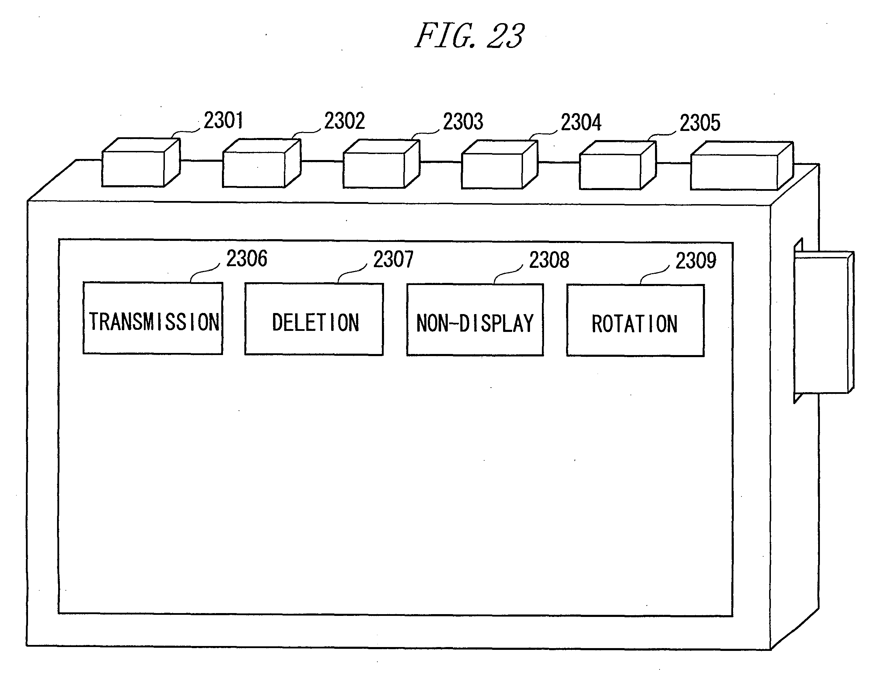

In performing the edition processing, display shown in FIG. 23 appears on the screen of the image display terminal (S2201). Accordingly, the user selects a content of the edition processing.

FIG. 23 is a schematic diagram of a screen displayed on the image display terminal when the edition processing is to be performed.

As shown in FIG. 23, an item "transmission" 2306 is associated with a button 2301.

The transmission is an item for shifting to a transmission menu.

Note that this item of transmission is not displayed when the image display terminal does not have a transmission authority with respect to a pertinent channel.

The image display terminal judges whether it has the transmission authority on the basis of the setting information of the respective channels that is acquired in setting information acquisition processing described in S1302 in FIG. 13.

An item "deletion" 2307 is associated with a button 2302.

This item of deletion is processing for deleting a pertinent image file.

An item "non-display" 2308 is associated with a button 2303.

This processing according to the setting of non-display is processing for not displaying a pertinent screen when the processing is selected.

An item "rotation" 2309 is associated with a button 2304.

This processing of rotation is processing for rotating an image such that the image can be seen in the correct directional orientation. In this embodiment, every time the button is pressed, the image is rotated to the left by 90 degrees.

Note that the items of deletion and rotation are not displayed when the image display terminal does not have an edition authority with respect to a pertinent channel.

The image display terminal judges whether it has the edition authority on the basis of the setting information of the respective channels that is acquired in the setting information acquisition processing described in S1302 in FIG. 13.

The image display terminal executes the respective processings on the basis of the selected processing (S2202).

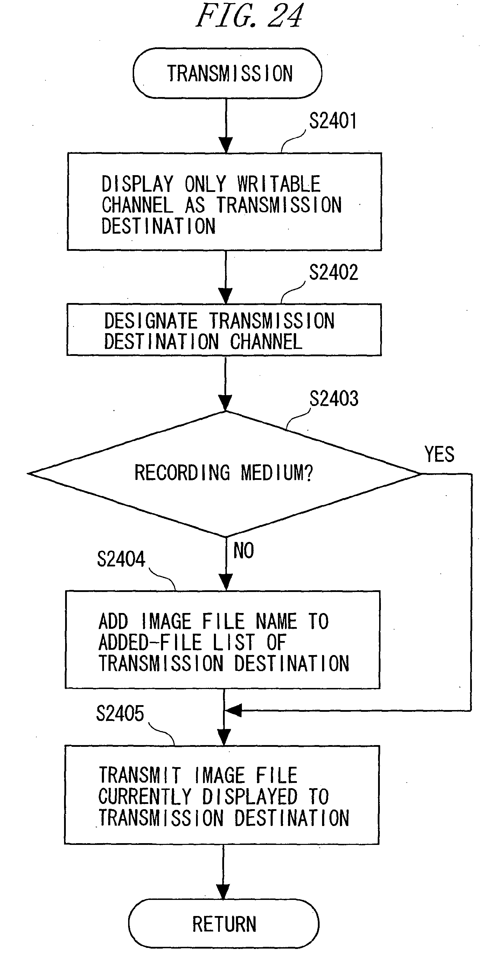

An operation of transmission processing will be explained as the respective processings in S2202 shown in FIG. 22 with reference to FIG. 24. FIG. 24 is a flowchart of the operation of transmission processing among the processings described in S2202 in FIG. 22.

When the transmission processing is selected, the image display terminal displays only a writable channel as a transmission destination (S2401).

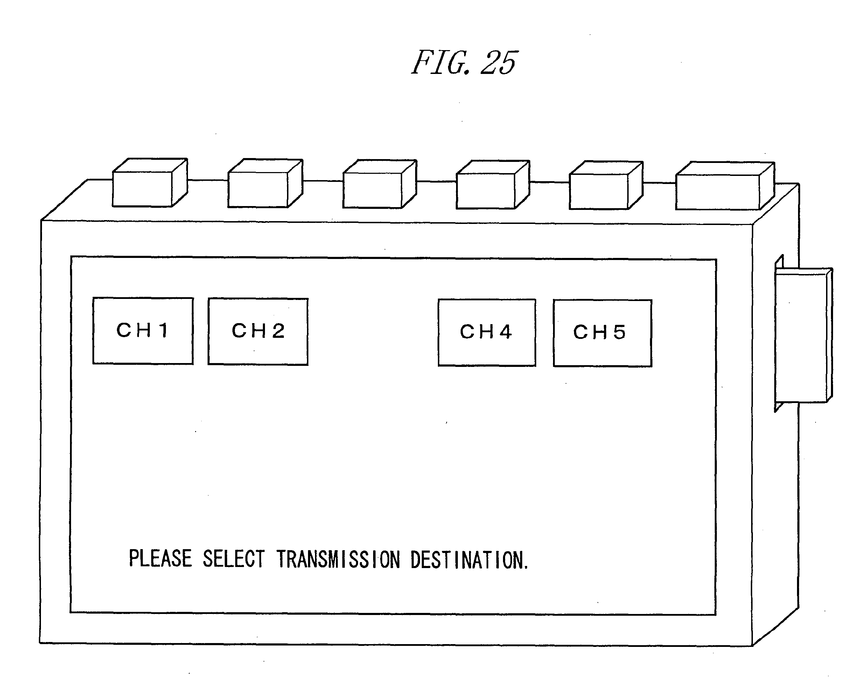

In other words, as shown in FIG. 25, the image display terminal displays a message "please select a transmission destination" and channels that are selectable as a transmission destination. FIG. 25 is an example of a screen that is displayed on the image display terminal in the case of a display processing operation in S2401 shown in FIG. 24.

There are four options of channels excluding a channel currently being watched. In the example shown in FIG. 25, the channel currently being watched is a channel 3.

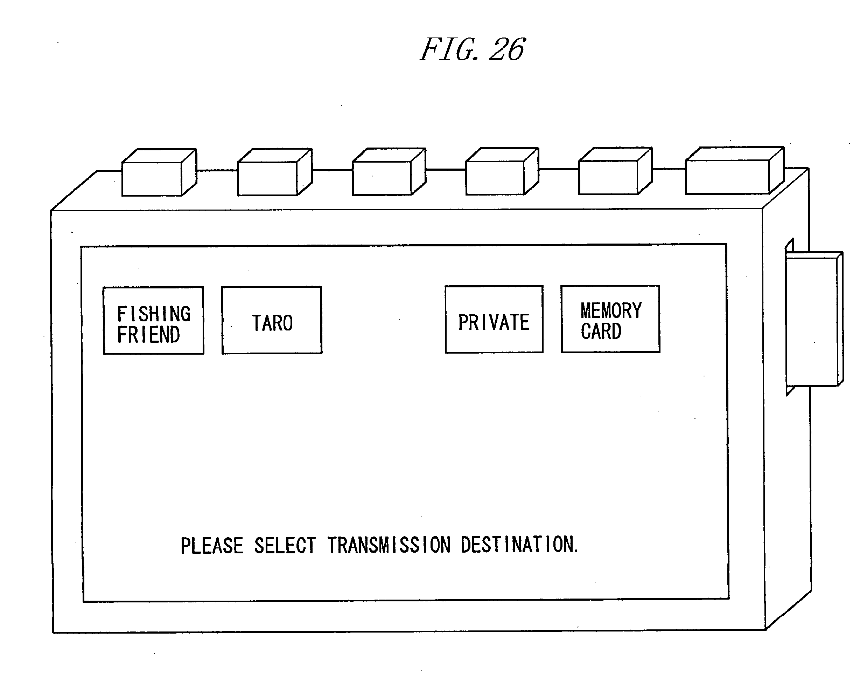

It is desirable that the channels are indicated by names of the respective channels as shown in FIG 26. FIG. 26 is an example of a screen that is displayed on the image display terminal in the case of the display processing operation in S2401 shown in FIG. 24.

The names of the channels are those given to the respective channels and indicated by the setting information shown in FIG. 9.

As a transmission destination, a destination not having an edition authority is not displayed. The image display terminal judges whether it has the edition authority on the basis of the setting information of the respective channels that are acquired in the setting information acquisition processing described in S1302 in FIG. 13.

When a recording medium is not inserted in the image display terminal, a channel corresponding to the recording medium is not displayed.

Subsequently, the user presses a button corresponding to a destination to thereby designate a channel of a transmission destination (S2402).

Subsequently, the image display terminal judges whether the destination of transmission is a recording medium inserted in the image display terminal (S2403).

If the destination is the recording medium (Yes), the image display terminal shifts its process to S2405.

If the destination is not the recording medium, the image display terminal shifts its process to S2404, adds a name of an image file to be transmitted in a file list corresponding to the transmission destination, and shifts its process to S2405.

In S2405, the image display terminal records an image file currently displayed in the own recording unit indicating the selected transmission destination, and ends the operation (S2405).

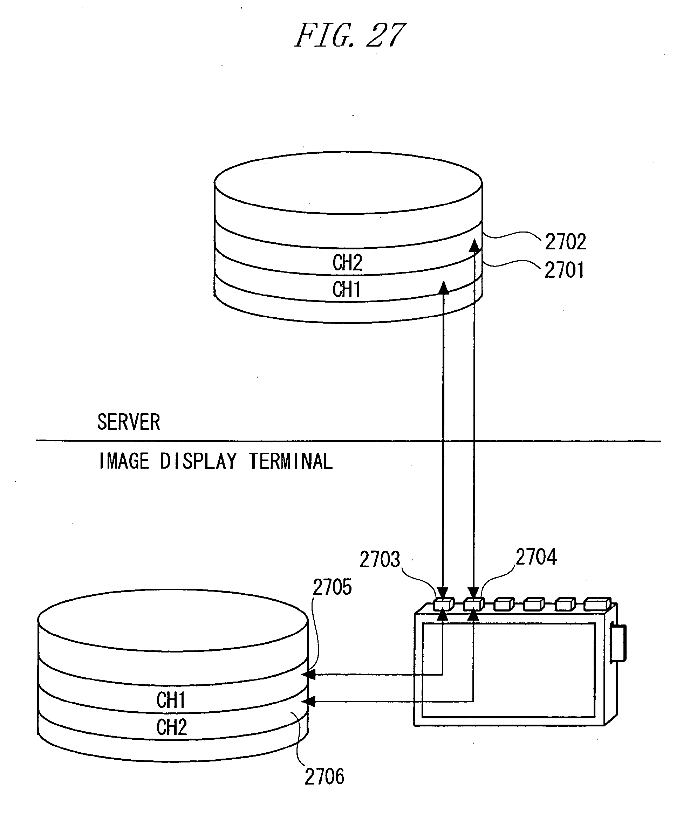

The operation in S2405 will be further explained with reference to FIG. 27. FIG. 27 is a conceptual diagram for explaining the operation in S2405 shown in FIG. 24.

As shown in FIG.27, in the image display terminal in this embodiment, areas 2701 and 2703, in which data on the server is recorded, correspond to the buttons 2703 and 2704 of the image display terminal, respectively.

The respective buttons also correspond to channels of the server and the image display terminal.

Also, areas 2705 and 2706, in which data of the image display terminal is recorded, also correspond to the buttons 2703 and 2704 of the image display terminal, respectively.

The transmission in S2405 means, for example, processing for transmitting an image file recorded in the area 2705 of a channel 1 of the image display terminal to the area 2706 of a channel 2 of the image display terminal and recording the image file in the area 2706 of a channel 2 of the image display terminal.

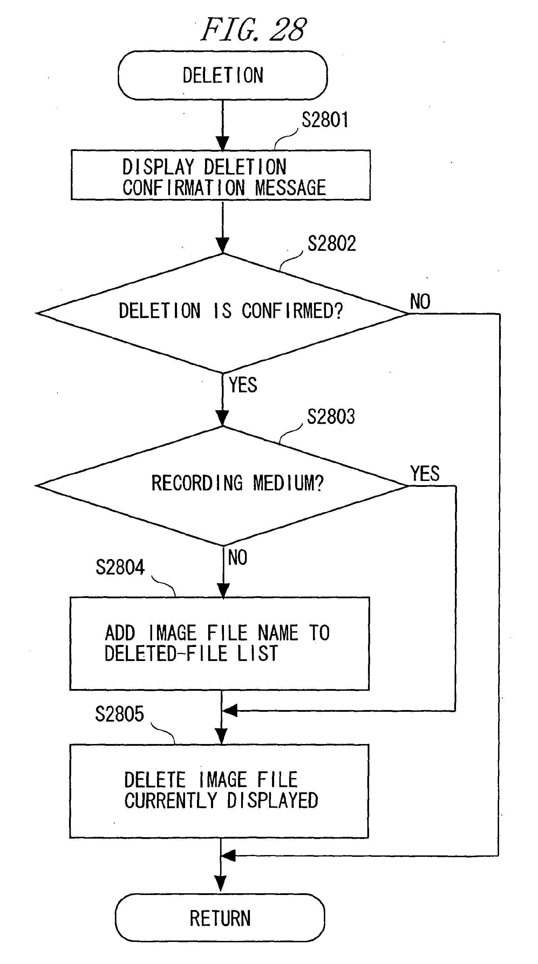

Next, deletion processing will be explained with reference to FIG. 28 as processing in the respective processings 2202 shown in FIG. 22. FIG. 28 is a flowchart of an operation of the deletion processing among the processings in S2202 shown in FIG. 22.

As shown in FIG. 28, when the deletion processing for an image file is performed, the image display terminal displays a deletion confirmation message on a screen (S2801).

This deletion confirmation message is given by displaying Yes and No below the respective buttons of the image display terminal.

Subsequently, if deletion confirmation is inputted (Yes), the image display terminal shifts its process to S2803. If deletion confirmation is not inputted (No), the image display terminal returns its process to the processing in S1901.

Subsequently, in S2803, the image display terminal checks to see whether the image file to be deleted is recorded in a recording medium inserted in the image display terminal (S2803).

If the image file is recorded in the recording medium (Yes), the image display terminal shifts its process to S2805. If the image file is not recorded in the recording medium (No), the image display terminal shifts its process to S2804.

In S2804, the image display terminal adds a file name of an image to be deleted in a deleted-file list, and shifts its process to S2805.

In S2805, the image display terminal deletes an image file currently displayed from the recording unit, and then returns its process to the processing in S1902.

### <Operation of the server>

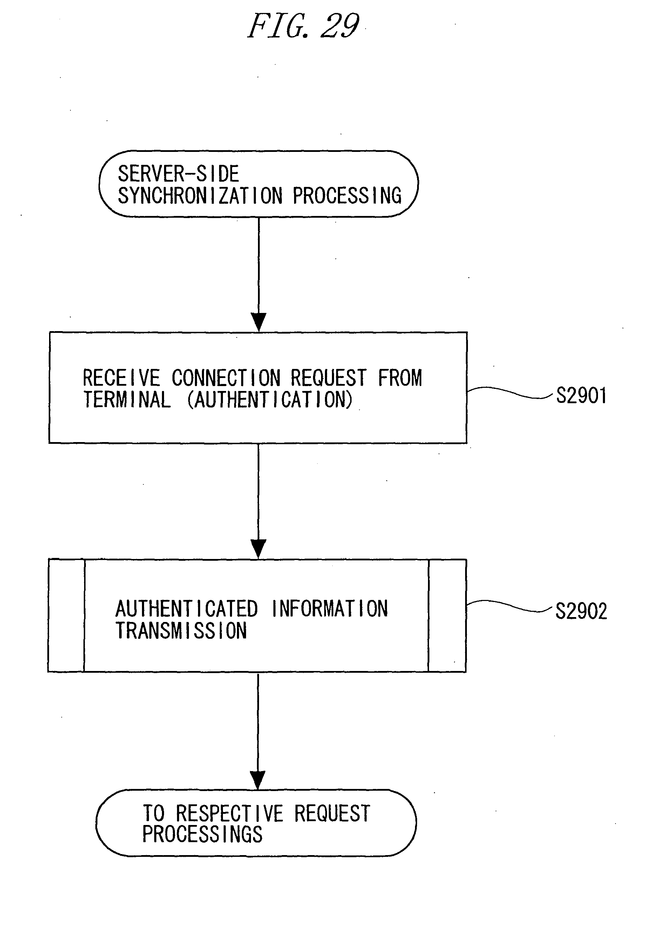

Next, an operation of the server in the data transmission system according to the embodiment the present invention will be explained with reference to FIGS. 29 to 34.

FIG. 29 is a flowchart of an operation of the server-side synchronization processing in the data transmission system according to the embodiment the present invention.

In S2901, when the server receives a connection request from an image display terminal, the server performs authentication for the image display terminal.

When the authentication ends, the server transmits authenticated information to the image display terminal, and then shifts its process to various kinds of processings (S2902).

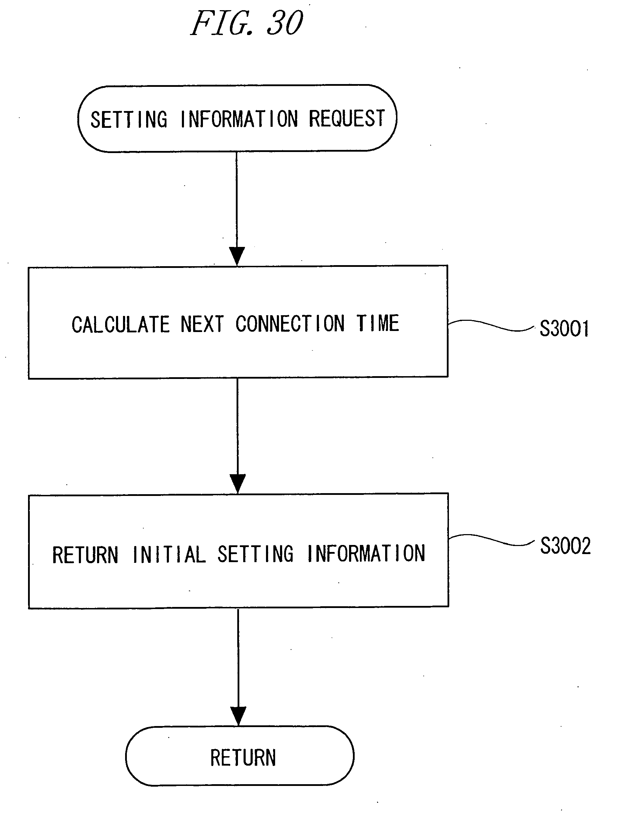

Next, an operation in the case in which the server is requested by the image display terminal to send setting information will be explained with reference to FIG. 30.

FIG. 30 is a flowchart of an operation of the server in the case in which the server is requested by the image display terminal to send setting information in the data transmission system according to the embodiment the present invention.

When the server is requested by the image display terminal to send setting information, the server calculates the next connection time and transmits the setting information to the image display terminal (S3001).

Moreover, the server acquires, for example, the information shown in FIG. 9 and returns the information to the image display terminal as initial setting information (S3002).

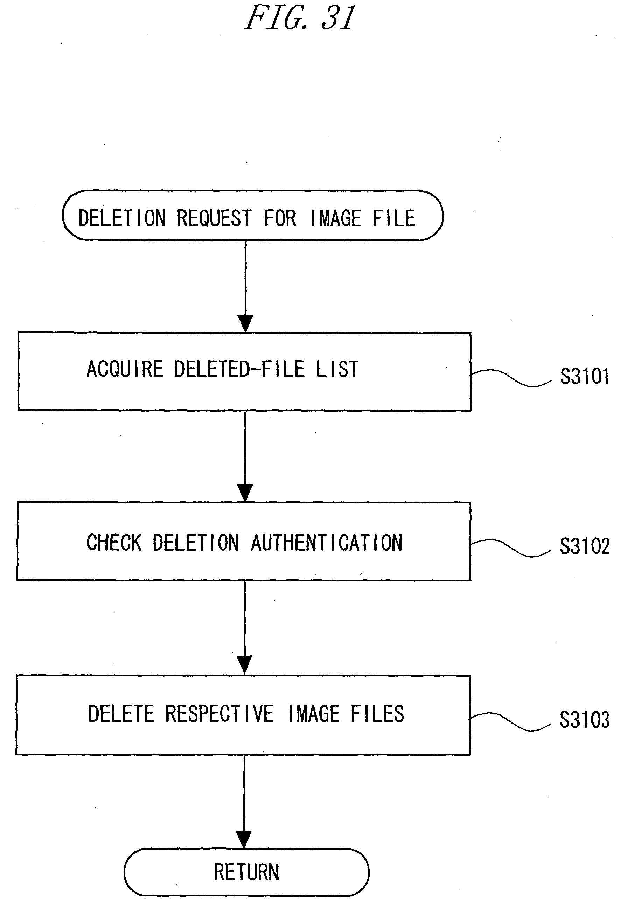

Next, an operation in the case in which the server receives a deletion request for image files from an image display terminal in the data transmission system according to the embodiment the present invention will be explained with reference to FIG. 31.

FIG. 31 is a flowchart of an operation in the case in which the server receives a deletion request for image files from an image display terminal in the data transmission system according to the embodiment the present invention.

As shown in FIG. 31, the server acquires a deleted-file list from the image display terminal (S3101).

Subsequently, the server checks to see whether the image display terminal, which has sent the deletion request, has the deletion authority (S3102).

The server checks to see whether the image display terminal has the deletion authority, according to, for example, presence or absence of the edition authority shown in FIG. 9.

When the image display terminal has the deletion authority, the server performs processing for deleting the respective image files from a recording unit in S3103.

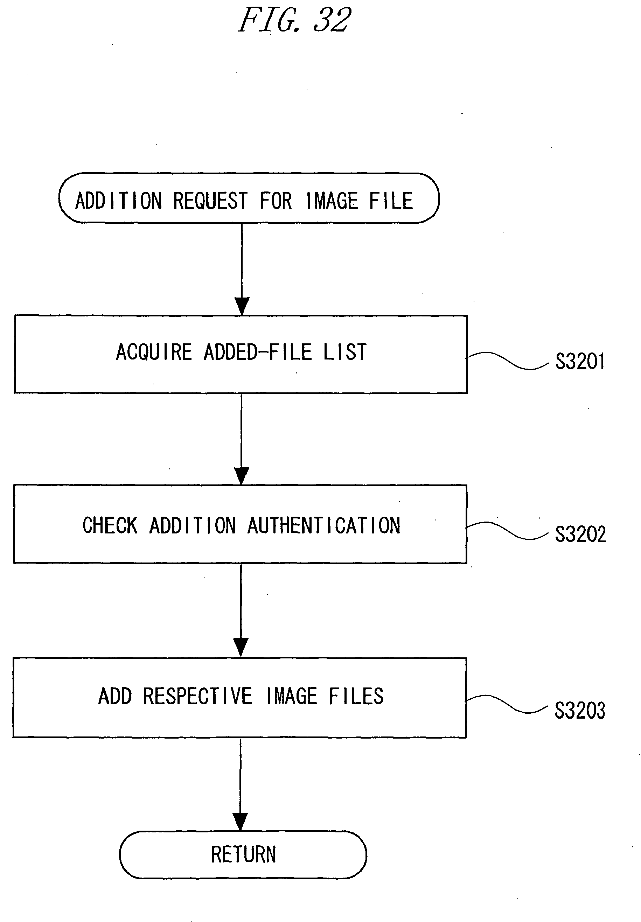

Next, an operation in the case in which the server receives an addition request for image files from an image display terminal in the data transmission system according to the embodiment the present invention will be explained with reference to FIG. 32.

FIG. 32 is a flowchart of an operation in the case in which the server receives the addition request for image files from the image display terminal in the data transmission system according to the embodiment the present invention.

As shown in FIG. 32, the server acquires the added-file list from the image display terminal (S3201).

Subsequently, the server checks to see whether the image display terminal, which has sent the addition request, has the addition authority (S3202).

The server checks to see whether the image display terminal has the addition authority, according to, for example, presence or absence of the edition authority shown in FIG. 9.

When the image display terminal has the addition authority, the server performs processing for adding the respective image files in the recording unit in S3203.

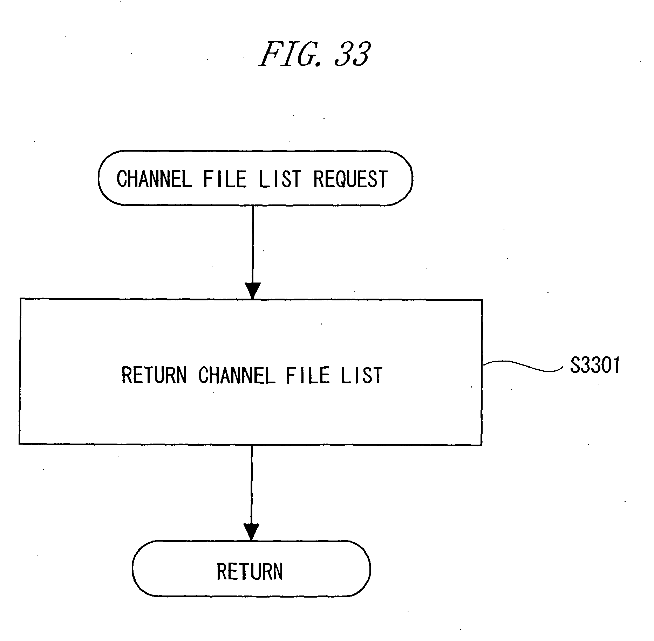

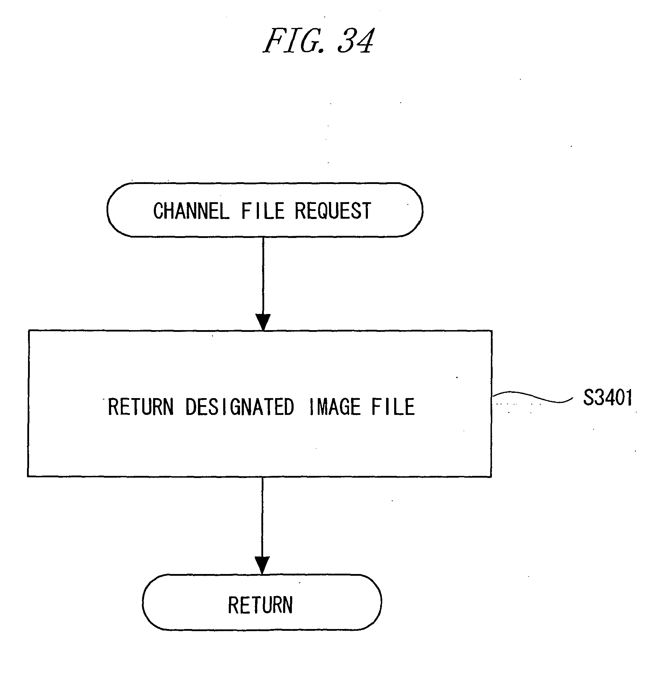

Next, an operation of the server when an image display terminal performs channel data update processing in the data transmission system according to the embodiment the present invention will be explained with reference to FIGS. 33 and 34. FIGS. 33 and 34 are flowcharts of an operation of the server in the case in which the image display terminal performs channel data update processing in the data transmission system according to the embodiment the present invention.

Note that the channel data update processing performed by an image display terminal is, for example, the processing described in S1203 in FIG. 12 and S1604 in FIG. 16.

First, the server returns a channel file list to the image display terminal on the basis of the channel file list request from the image display terminal (S3301).

In other words, the server returns the channel file list showing an image file recorded in a predetermined channel to the image display terminal.

Subsequently, the server returns a designated image file to the image display terminal on the basis of the channel file request from the image display terminal (S3401).

### <Explanation of functions>

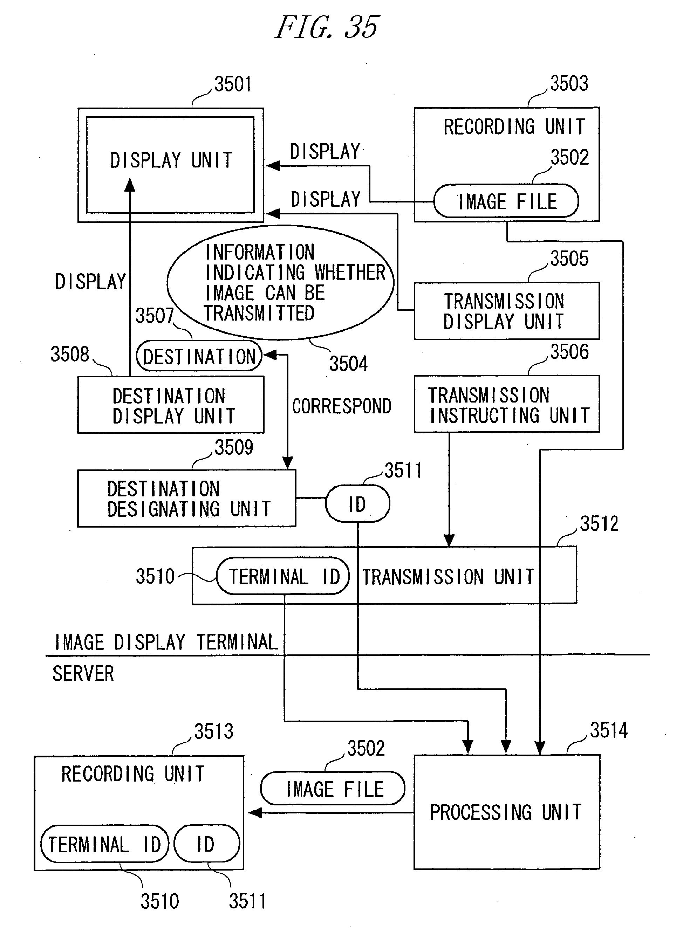

Next, functions of the image display terminal and the server constituting the data transmission system according to the embodiment the present invention will be explained with reference to FIGS. 35 to 38. FIGS. 35 to 38 are conceptual diagrams showing functions of the image display terminal and the server in the data transmission system according to the embodiment the present invention.

### <First function of this embodiment>

First, a case will be explained in which a first function of the data transmission system according to the embodiment the present invention is to be realized.

As shown in FIG. 35, the image display terminal in this embodiment includes a display unit 3501 that displays an image. For example, the display unit 409 shown in FIG. 4 corresponds to the display unit 3501.

The image display terminal in this embodiment also includes a recording unit 3503 that records an image file 3502 of an image to be displayed.

The image display terminal in this embodiment also includes a transmission display unit 3505 that causes the display unit 3501 to display information 3504 indicating whether an image displayed on the display unit 3501 can be transmitted. This information 3504 indicating whether an image can be transmitted is, for example, the item "transmission" 2306 corresponding to the button 2301 shown in FIG. 23.

Note that the information 3504 indicating whether an image can be transmitted is displayed on the basis of, for example, the transmission authority 904 shown in FIG. 9.

However, in the present invention, the transmission display unit 3505 may display information for simply instructing transmission rather than the information 3504 indicating whether an image can be transmitted.

In other words, an embodiment in the case in which presence or absence of a transmission authority is not set for data recorded in an area on the server is also conceivable.

In this case, a user of the image display terminal can freely transmit the data recorded in the area on the server.

Therefore, in this case, the transmission display unit 3505 displays information for simply instructing transmission rather than the information 3504 indicating whether an image can be transmitted.

The image display terminal in this embodiment also includes a transmission instructing unit 3506 for instructing a transmitting unit to transmit an image file of a predetermined image, which can be transmitted, to other recording unit.

For example, the buttons 401, 402, 403, 404, and 405 shown in FIG. 4 correspond to the transmission instruction unit 3506.

The image display terminal in this embodiment also includes a destination display unit 3508 that causes the display unit 3501 to display a destination 3507 indicating other recording medium.

However, in the present invention, this destination display unit 3508 does not have to be provided if it is possible to designate a destination of the other recording medium without displaying a destination.

The image display terminal in this embodiment includes a destination designating unit 3509, which is associated with the destination 3507 displayed on the display unit 3501, for designating the destination 3507.

For example, the display of a channel and the display of a name of a channel shown in FIGS. 25 and 26 correspond to the destination 3507.

For example, the buttons 401, 402, 403, 404, and 405 correspond to the destination designating unit 3509.

The image display terminal in this embodiment also includes a transmission unit 3512 that gives an ID 3511 for identifying a terminal ID 3510 of the image display terminal itself and the destination designating unit 3509 to the image file 3502 of the image to be transmitted, and transmits the image file 3502 to servers having other recording units.

For example, the user ID in the above explanation corresponds to the terminal ID 3510 of the image display terminal itself. The channel number corresponds to the ID 3511 for identifying the destination designating unit 3509.

The server in this embodiment also includes a recording unit 3513 that is identified on the basis of the terminal ID 3510 of the image display terminal itself and the ID 3511 for identifying the destination designating unit 3509.

The server in this embodiment also includes a processing unit 3514 that records the image file 3502 in the recording unit 3513 on the basis of the terminal ID 3510 of the image display terminal itself and the ID 3511 for identifying the destination designating unit 3509.

### <Second function of this embodiment>

Next, a case in which a second function of the data transmission system according to the embodiment the present invention will be explained.

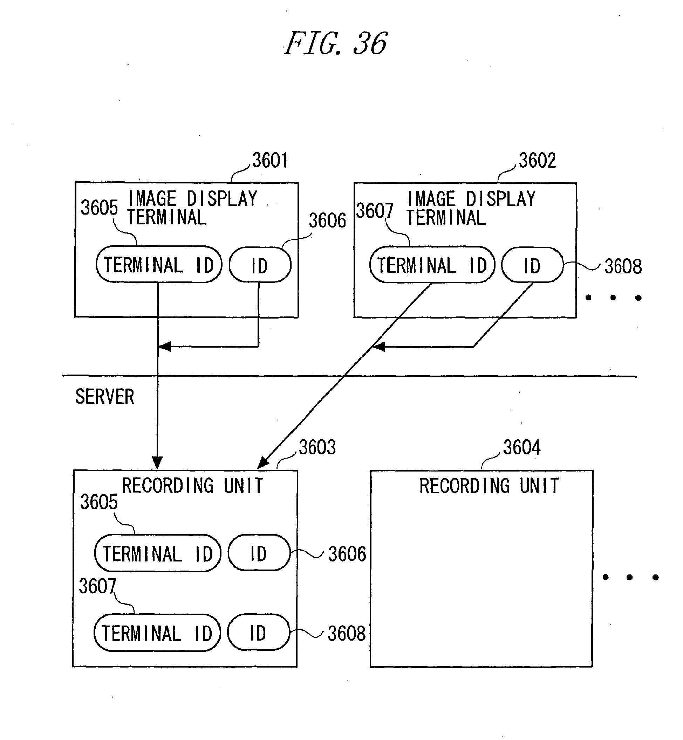

As shown in FIG. 36, in this case, plural image display terminals 3601 and 3502 are provided.

The server includes at least one or more recording units 3603 and 3604.

A terminal ID 3605 of the image display terminal 3601 itself and an ID 3606 for identifying a destination designating unit as well as a terminal ID 3605 of the image display terminal 3602 and an ID 3606 for identifying a destination designating unit of the at least two or more image display terminals of the image display terminals 3601 and 3602 identify the identical recording unit 3603 of the at least one or more recording units.

For example, the user ID in the above explanation corresponds to the terminal ID 3605 and the terminal ID 3607 of the image display terminal itself. The channel number corresponds to the ID 3606 and ID 3608 for identifying the destination designating unit 3509. <Third function of this embodiment>

Next, a case in which a third function of the data transmission system according to the embodiment the present invention will be explained.

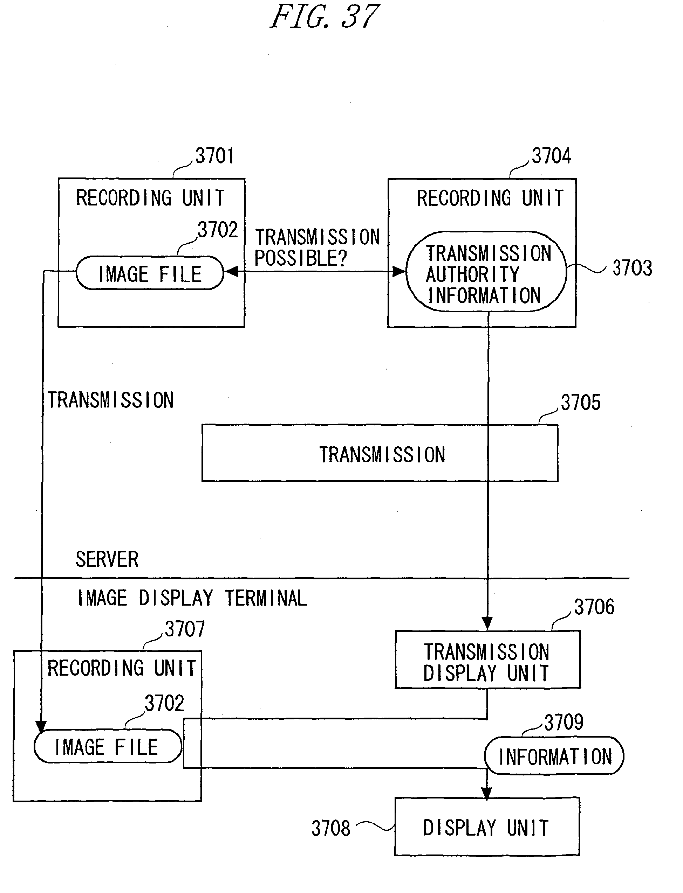

As shown in FIG. 37, the server in this embodiment includes a recording unit 3704 that records transmission authority information 3703, which indicate whether an authority to transmit an image file 3702 recorded in a recording unit 3701 to other recording units is held, set for each recording unit 3701 and for each image display terminal.

The transmission authority information 3703 corresponds to, for example, the transmission authority 904 for setting information shown in FIG. 9.

The server in this embodiment includes a transmission unit 3705 that transmits the transmission authority information 3703 recorded in the recording unit 3704 to the respective image display terminals.

When a transmission display unit 3706 is set to have a transmission authority in the transmission authority information 3703, the image display terminal in this embodiment causes a display unit 3708 to display information 3709, which indicates that an image of the image file 3702 recorded in a recording unit 3707 can be transmitted, recorded in the recording unit 3701 corresponding to the transmission authority information.

The information 3709 corresponds to the item "transmission" 2306 corresponding to the above-mentioned button 2301 shown in FIG. 23.

### <Fourth function of this embodiment>

Next, a case in which a fourth function of the data transmission system according to the embodiment the present invention will be explained.

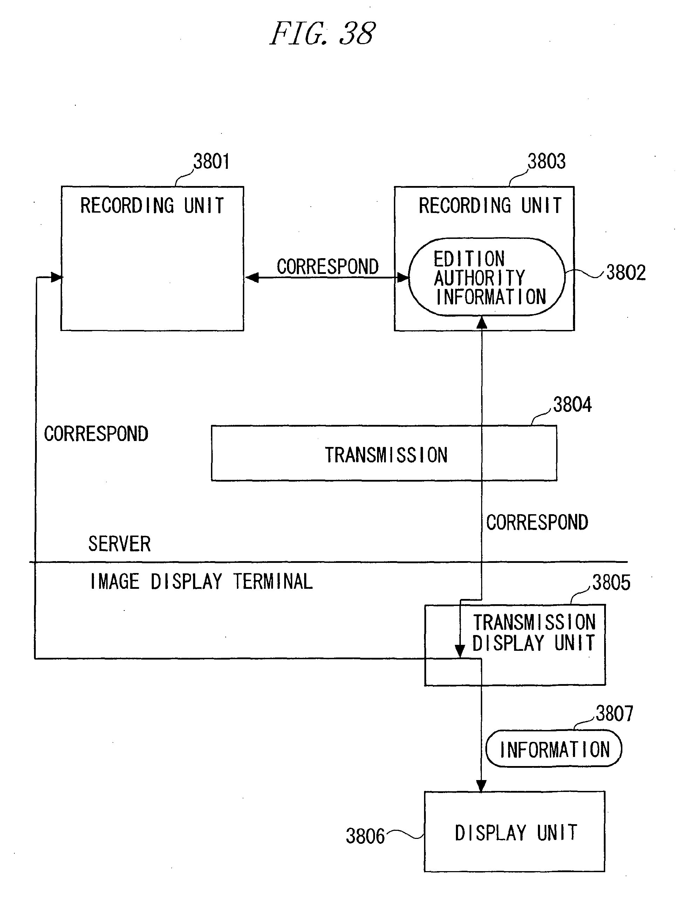

As shown in FIG. 38, the server in this embodiment includes a recording unit 3803 that records edition authority information 3802, which indicate whether an authority to transmit an image file to a recording unit 3801 is held, set for each recording unit and for each image display terminal.

Note that the edition authority information 3802 may also include information on authority to apply processing such as rotation and reduction to an image file recorded in the recording unit 3801.

The transmission authority information 3802 corresponds to, for example, the edition authority 903 for setting information shown in FIG. 9.

The server in this embodiment also includes a transmission unit 3804 that transmits the edition authority information 3802 recorded in the recording unit 3803 to respective image display terminals.

When a destination display unit 3805 is set to have an edition authority in the edition authority information 3802, the image display terminal in this embodiment causes a display unit 3806 to display a destination 3807 corresponding to the recording unit 3801 that corresponds to the edition authority information.

The destination 3807 to be displayed corresponds to, for example, the display of the channel and the display of the name of the channel shown in FIGS. 25 and 26.

Note that the functions of the respective units such as the image display terminal and the server in the respective functions of the embodiment are realized by CPUs of the image display terminal and the server cooperating with a program recorded in a memory or the like and other members.

An arbitrary combination of the respective recording units of the image display terminal shown in FIGS. 34 to 38 may be realized by an identical memory or may be realized by separate memories.

Similarly, an arbitrary combination of the respective recording units of the server may be realized by an identical memory or may be realized by separate memories.

In the explanation of the data transmission system according to the embodiment the present invention, the image display terminal for displaying an image is explained as an independent unit.

However, the present invention is not limited to such a case and the image display terminal explained in the embodiment may also be incorporated in an arbitrary home appliance.

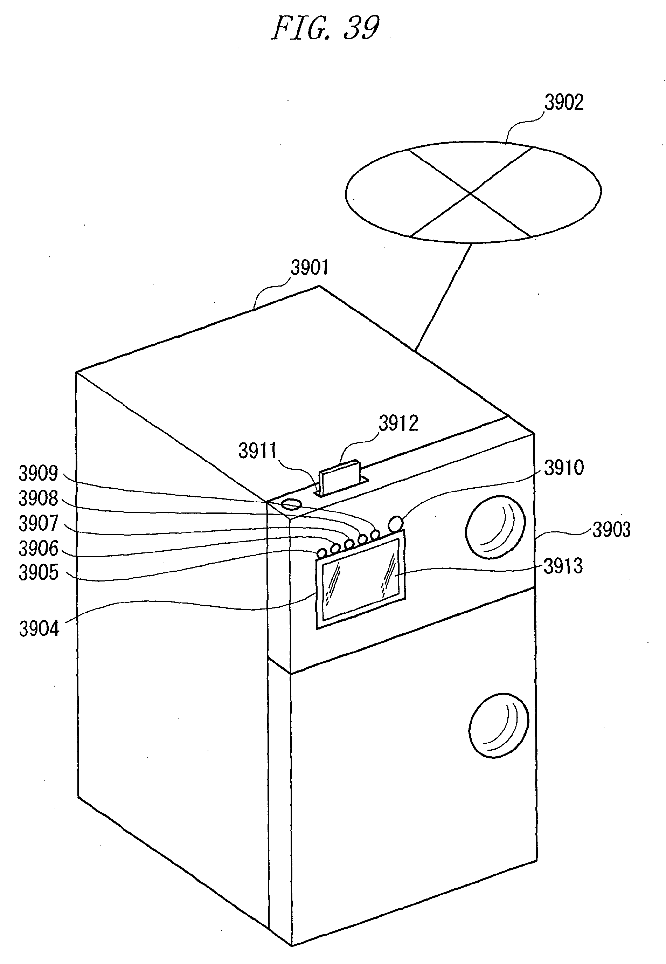

For example, a case in which the image display terminal explained in the embodiment is incorporated in a refrigerator will be explained with reference to FIG. 39.

FIG. 39 is a schematic diagram of a case in which the image display terminal used in the data transmission system according to the embodiment the present invention is incorporated in a refrigerator.

As shown in FIG. 39, a refrigerator 3901 is connected to a network 3902.

An image display terminal 3904 explained in the embodiment is incorporated in a door 3903 of the refrigerator 3901.

As in the case explained with reference to FIG. 4, the image display terminal 3904 includes buttons 3905, 3906, 3907, 3908, 3909, and3910, a recording medium interface unit 3911 into which a recording medium 3912 is to be inserted, and a display unit 3913.

In the image display terminal shown in FIG. 39, unlike the case shown in FIG. 4, a shape of the buttons 3905, 3906, 3907, 3908, 3909, and 3910 is formed such that those can be pressed to the refrigerator 3901 side.

Even the image display terminal 3904 shown in FIG. 39 shows the same functions as the image display terminal shown in FIG. 4.

Therefore, a user can see an image conveniently by, for example, incorporating the image display terminal 3904 in the refrigerator 3901 as shown in FIG. 39.

In addition, the user is released from the trouble in finding a place for setting an image display terminal by, for example, incorporating the image display terminal 3904 in the refrigerator 3901.

In the above explanation, a refrigerator is cited as an example of an object in which an image display terminal is incorporated. However, such an object, in which the image display terminal used in the data transmission system of the present invention, is not limited to a refrigerator and may also be a wall, a desk, and the like.

In the explanation of the data transmission system according to the embodiment the present invention, one server executes various kinds of processings on the server side. However, the present invention is not limited to such a case.

That is, a server for recording an image file, one or more application servers for sharing various kinds of processings, one or more database servers for recording data, and the like, which cooperate with one another, may also be installed as servers to share roles.

In the above explanation, data of an image is cited as an example of data to be transmitted and received by the image display terminal and the server.

However, the present invention is not limited to such a case and image data added with audio data may be transmitted and received.

In this case, the image display terminal includes a sound generating unit that generates sounds.

In the data transmission system according to the embodiment the present invention, a content of data to be transmitted and received and a content of an image are not specifically limited.

For example, it is also possible that the server attaches characters to a file as a character code (or provides an area in an image file, etc.) and transmits the file to the image display terminal, and the image display terminal, which has received this character code, combines text information such as a message corresponding to the character code with, for example, an image to display the resultant data on the display unit. It is needless to mention that the image display terminal may display only the text information on the display unit.

Note that processing for combining text data and image data to form data to be displayed may be performed by the server or may be performed by the image display terminal.

It is also possible that, for example, a content of an electronic mail is imaged and the imaged electronic mail is transmitted and received by the image display terminal.

A content of an electronic mail received by the image display terminal is displayed on the display unit.

In this case, it is possible to transmit and receive electronic mails conveniently using the image display terminal.

In the above explanation, the buttons are cited as an example of the input unit of the image display terminal. A shape and a type of the buttons are not specifically limited.

The input unit of the present invention is not limited to such a case of the buttons. As the input unit of the image display terminal, it is possible to use, for example, an input unit using an infrared sensor and an input unit for detecting a change in potential as a user touches the input unit.

As the input unit of the present invention, it is possible to use, for example, a remote controller. In this case, the buttons of the image display terminal may be unnecessary.

This remote controller may include, for example, a menu button for performing the menu operation described above.

It is also possible that the remote controller includes a destination input button for designating a destination of data to be transmitted such that arrangement of this destination input button on the remote controller and arrangement of display of the destination on the screen of the image display terminal coincide with each other.

It is also possible that different colors, characters, signs, or combinations thereof are associated with plural destination input buttons, and the colors, the characters, the signs, or the combinations thereof associated with the destination input buttons are associated with destinations displayed on the screen of the image display terminal to associate the destination input buttons and the destinations.

Destinations corresponding to the destination input buttons may be shown on a remote controller by a sticker or printing.

In the above explanation, for example, as shown in the transmission authority 904 in FIG. 9, propriety of transmission is judged on the basis of a transmission authority to transmit an image file.

However, the present invention is not limited to such a case. An image file can be transmitted freely, without setting a transmission authority.

In the above explanation, for example, as shown in the edition authority 903 in FIG. 9, it is judged whether the image display terminal has an edition authority with respect to an area on the server.

However, the present invention is not limited to such a case. Recording of data in an area on the server and processing of data recorded in the area can be performed freely, without setting an edition authority for the area on the server.

As it is evident from the above explanation, in the data transmission system according to the embodiment the present invention, it is possible to transmit data, such as an image file, from the image display terminal to the server only by operating buttons.

Therefore, a user of the image display terminal does not have to perform complicated operation.

As a result, it is possible to realize sharing of an image between the image display terminal and other apparatuses with simple operation.

### Industrial Applicability

The present invention is suitably applied to, for example, a system for sharing data.

## Claims

1. A data transmission system, comprising:
an image display apparatus including:
a display means that displays an image;
a first recording means that records an image file of the image to be displayed;
a transmission instructing means that instructs transmitting means to transmit the image file of the image to another recording means different from the first recording means;
a destination designating means that designates a destination of the another recording medium; and
a transmitting means that gives an own apparatus ID and an ID for identifying the destination designating means to the image file of the image to be transmitted and transmits the image file to an apparatus having the another recording means; and
a server including:
a second recording means that is identified on the basis of the own apparatus ID and the ID for identifying the destination designating means; and
a processing means that records the image file in the second recording means on the basis of the own apparatus ID and the ID for identifying the destination designating means.

2. A data transmission system according to claim 1, wherein:
plural image display apparatuses are provided;
the server includes at least one or more second recording means; and
the own apparatus ID and the ID for identifying the destination designating means of each of at least two or more image display apparatuses of the image display apparatuses identify identical second recording means among the second recording means.

3. A data transmission system according to claim 1, wherein:
the image display apparatus includes at least one or more buttons;
the transmission instructing means is constituted of at least one of the buttons; and
the destination designating means is constituted of at least one of the buttons.

4. A data transmission system according to claim 1, wherein the image display apparatus includes transmission display means that causes the display means to display information indicating whether or not the displayed image can be transmitted.

5. A data transmission system according to claim 4, wherein:
the server includes:
a third recording means that records transmission authority information, which indicates whether or not the server has an authority to transmit the image file recorded in the second recording means to another recording means, set for each second recording means and for each image display apparatus; and
a second transmitting means that transmits the transmission authority information recorded in the third recording means to the image display apparatus; and
the transmission display means causes, when the transmission display means is set to have a transmission authority in the transmission authority information, the display means to display information, which indicates that an image of the image file recorded in the first recording means can be transmitted, recorded in the second recording means corresponding to the transmission authority information.

6. A data transmission system according to claim 1, wherein:
the server includes:
a fourth recording means that records edition authority information, which indicates whether or not the server has an authority to transmit the image file to the second recording means, set for each second recording means and for each image display apparatus; and
a third transmittingmeans that transmits the edition authority information recorded in the fourth recording means to the image display apparatus;
the image display apparatus includes destination displaymeans that causes the display means to display a destination indicating the another recording means; and
the destination display means causes, when the destination display means is set to have an edition authority in the edition authority information, the display means to display a destination corresponding to the second recording means that corresponds to the edition authority information.

7. An image display apparatus, comprising:
a display means that displays an image;
a recording means that records an image file of the image to be displayed;
a transmission instructing means that instructs transmitting means to transmit the image file of the image to another recording means different from the recording means;
destination designating means that designates a destination of the another recording medium; and
transmitting means that gives an own apparatus ID and an ID for identifying the destination designating means to the image file of the image to be transmitted and transmits the image file to an apparatus having the another recording means.

8. An image display apparatus according to claim 7, comprising:
at least one or more buttons;
the transmission instructing means is constituted of at least one of the buttons; and
the destination designating means is constituted of at least one of the buttons.

9. An image display apparatus according to claim 7, wherein the image display apparatus includes transmission display means that causes the display means to display information indicating whether or not the displayed image can be transmitted.

10. An image display apparatus according to claim 9, wherein the transmission display means causes, when the transmission display means is set to have a transmission authority in transmission authority information indicating whether or not the transmission display means has an authority to transmit an image file displayed on the display means to the another recording means, the display means to display information that indicates that an image of the image file recorded in the recording means can be transmitted.

11. An image display apparatus according to claim 7, comprising destination display means that causes the display means to display a destination indicating the another recording means,
wherein the destination display means causes, when the destination display means is set to have an edition authority in the edition authority information indicating whether or not the destination display means has an authority transmit an image file to the another recording means in the transmission destination of the image file, the display means to display a destination corresponding to the another recording means that corresponds to the edition authority information.

12. A server, comprising:
a first recording means that is identified on the basis of an own apparatus ID of an image display apparatus that displays an image and an ID for identifying destination designating means, which designates a destination, provided in the image display apparatus and associated with a destination of the recording means in which the image file is to be recorded; and
a processing means that records an image file, which is received together with the own apparatus ID and the ID for identifying the destination designating means, in the first recording means on the basis of the own apparatus ID and the ID for identifying the destination designating means.

13. A server according to claim 12, comprising:
at least one or more first recording means,
wherein the own apparatus ID and the ID for identifying the destination designating means of each of at least two or more image display apparatuses of the image display apparatuses identify identical recording means among the first recording means.

14. A server according to claim 12, comprising:
a second recording means that records transmission authority information, which indicates whether or not the server has an authority to transmit the image file recorded in the first recording means to another recording means, set for each first recording means and for each image display apparatus; and
a first transmitting means that transmits the transmission authority information recorded in the second recording means to the image display apparatus.

15. A server according to claim 12, comprising:
a third recording means that records edition authority information; which indicates whether or not the server has an authority to transmit the image file to the first recording means, set for each first recording means and for each image display apparatus; and
a second transmitting means that transmits the edition authority information recorded in the third recording means to the image display apparatus.

16. A data transmission method, comprising:
a first display step in which an image display apparatus displays an image on displaying means;
a transmission instructing step in which the image display apparatus instructs transmitting means to transmit an image file of the image to another recording means;
a destination designating step in which the image display apparatus designates a destination on the basis of an input to destination designating means that designates a destination of the another recording means;
a first transmission step in which the image display apparatus gives an own apparatus ID and an ID for identifying the destination designating means to the image file of the image to be transmitted and transmits the image file to an apparatus having the another recording means; and
a processing step in which a server records the image file in first recording means, which is identified on the basis of the own apparatus ID and the ID for identifying the destination designating means, on the basis of the own apparatus ID and the ID for identifying the destination designating means.

17. A data transmission method according to claim 16, wherein:
the server includes a second recording means that records transmission authority information, which indicates whether or not the server has an authority to transmit the image file recorded in the first recording means to another recording means, set for each first recording means and for each image display apparatus; and
the data transmission method comprises:
a second transmission step in which the server transmits transmission authority information recorded in the second recording means to the image display apparatus; and
a second display step in which the image display apparatus causes, when the image display apparatus is set to have a transmission authority in the transmission authority information, the display means to display information indicating that the image of the image file recorded in the first recording means can be transmitted.

18. A data transmission method according to claim 16, wherein:
the server includes a third recording means that records edition authority information, which indicates whether or not the server has an authority to transmit the image file to the first recording means, set for each first recording means and for each image display apparatus; and
the data transmission method comprises:
a third transmission step in which the server transmits edition authority information recorded in the third recording means to the image display apparatus; and
a third display step in which the image display apparatus causes, when the image display apparatus is set to have an edition authority in the edition authority information, the display means to display a destination corresponding to the first recording means that correspond to the edition authority information.

19. A data transmission program, which causes a computer to function as:
a display means that displays an image;
a recording means that records an image file of the image to be displayed;
a transmission instructing means that instructs transmitting means to transmit the image file of the image to another recording means different from the recording means;
a destination designating means that designates a destination of the another recording medium; and
a transmitting means that gives an own apparatus ID and an ID for identifying the destination designating means to the image file of the image to be transmitted and transmits the image file to an apparatus having the another recording means.

20. A data transmission program according to claim 19, wherein the image display apparatus includes transmission display means that causes the display means to display information indicating whether or not the displayed image can be transmitted.

21. A data transmission program according to claim 20, wherein the transmission display means causes, when the transmission display means is set to have a transmission authority in transmission authority information indicating whether or not the transmission display means has an authority to transmit an image file displayed on the display means to the another recording means, the display means to display information that indicates that an image of the image file recorded in the first recording means can be transmitted.

22. A data transmission program according to claim 19, wherein:
the program causes the computer to function as:
a destination display means that causes the display means to display a destination indicating the another recording means; and
the destination display means causes, when the destination display means is set to have an edition authority in the edition authority information indicating whether or not the destination display means has an authority transmit an image file to the another recording means in the transmission destination of the image file, the display means to display a destination corresponding to the another recording means that corresponds to the edition authority information.

23. A data transmission program, which causes a computer to function as:
a first recording means that records and image file and is identified on the basis of an own apparatus ID of an image display apparatus that displays an image and an ID for identifying destination designating means, which designates a destination, provided in the image display apparatus and associated with a destination of the recording means in which the image file is to be recorded; and
a processing means that records the image file, which is received together with the own apparatus ID and the ID for identifying the destination designating means, in the first recording means on the basis of the own apparatus ID and the ID for identifying the destination designating means.

24. A data transmission program according to claim 23, wherein the program causes the computer to function as:
a second recording means that records transmission authority information, which indicates whether or not a server has an authority to transmit the image file recorded in the first recording means to another recording means, set for each first recording means and for each image display apparatus; and
a first transmitting means that transmits the transmission authority information recorded in the second recording means to the image display apparatus.

25. A data transmission program according to claim 23, wherein the program causes the computer to function as:
a third recording means that records edition authority information, which indicates whether or not a server has an authority to transmit the image file to the first recording means, set for each first recording means and for each image display apparatus; and
a second transmitting means that transmits the edition authority information recorded in the third recording means to the image display apparatus.

26. A computer-readable recording medium for recording a data transmission program that causes a computer to function as:
a display means that displays an image;
a recording means that records an image file of the image to be displayed;
a transmission instructing means that instructs transmitting means to transmit the image file of the image to another recording means different from the first recording means;
a destination designating means that designates a destination of the another recording medium; and
a transmitting means that gives an own apparatus ID and an ID for identifying the destination designating means to the image file of the image to be transmitted and transmits the image file to an apparatus having the another recording means.

27. A computer-readable recording medium for recording a data transmission program according to claim 26, wherein the program causes the computer to function as transmission display means that causes the display means to display information indicating whether or not the displayed image can be transmitted.

28. A computer-readable recording medium for recording a data transmission program according to claim 27, wherein the transmission display means causes, when the transmission display means is set to have a transmission authority in transmission authority information indicating whether or not the transmission display means has an authority to transmit an image file displayed on the display means to the another recording means, the display means to display information that indicates that an image of the image file recorded in the first recording means can be transmitted.

29. A computer-readable recording medium for recording a data transmission program according to claim 26, wherein:
the program causes the computer to function as destination display means that causes the display means to display a destination indicating the another recording means; and
the destination display means causes, when the destination display means is set to have an edition authority in the edition authority information indicating whether or not the destination display means has an authority transmit an image file to the another recording means in the transmission destination of the image file, the display means to display a destination corresponding to the another recording means that corresponds to the edition authority information.

30. A computer-readable recording medium for recording a data transmission program that causes a computer to function as:
a first recording means that records and image file and is identified on the basis of an own apparatus ID of an image display apparatus that displays an image and an ID for identifying destination designating means, which designates a destination, provided in the image display apparatus and associated with a destination of the recording means in which the image file is to be recorded; and
a processing means that records the image file, which is received together with the own apparatus ID and the ID for identifying the destination designating means, in the first recording means on the basis of the own apparatus ID and the ID for identifying the destination designating means.

31. A computer-readable recording medium for recording a data transmission program according to claim 30, wherein the program causes the computer to function as:
a second recording means that records transmission authority information, which indicates whether or not the server has an authority to transmit the image file recorded in the first recording means to another recording means, set for each first recording means and for each image display apparatus; and
a first transmitting means that transmits the transmission authority information recorded in the second recording means to the image display apparatus.

32. A computer-readable recording medium for recording a data transmission program according to claim 30, wherein the program causes the computer to function as:
a third recording means that records edition authority information, which indicates whether or not a server has an authority to transmit the image file to the first recording means, set for each first recording means and for each image display apparatus; and
a second transmitting means that transmits the edition authority information recorded in the third recording means to the image display apparatus.
